# EUROPÄISCHE PATENTSCHRIFT

(11) **EP 1 951 831 B1**
(45) Veröffentlichungstag und Bekanntmachung des Hinweises auf die Patenterteilung: **23.02.2011**
(21) Anmeldenummer: 05813561.7
(22) Anmeldetag: 10.11.2005
(51) Int. Cl.: C09J 4/00, C08F 222/00, C09D 4/00

(54) **KLEB-, DICHT- UND BESCHICHTUNGSSTOFFE MIT GLASPARTIKELN ALS FÜLLSTOFF**
ADHESIVES, SEALANTS AND COATINGS CONTAINING GLASS PARTICLES AS A FILLER
SUBSTANCES ADHESIVES, D'ETANCHEITE, ET DE REVETEMENT CONTENANT DES PARTICULES DE VERRE EN TANT QUE MATIERE DE CHARGE

(43) Veröffentlichungstag der Anmeldung: 06.08.2008
(73) Patentinhaber: Henkel AG & Co. KGaA, 40589 Düsseldorf (DE)
(72) Erfinder: LOTH, Helmut, 45131 Essen (DE); FRIESE, Carsten, 40219 Düsseldorf (DE); KLEIN, Johann, 40593 Düsseldorf (DE); SCHMIDT, Olivier, 40764 Langenfeld (DE)
(86) Internationale Anmeldenummer: PCT/EP2005/012074
(87) Internationale Veröffentlichungsnummer: WO 2007/054113

(56) Entgegenhaltungen:
- EP-A- 0 254 501
- DE-A1- 10 252 693
- US-A- 4 005 035
- US-A- 4 979 990
- US-A- 5 409 996

## Beschreibung

Die vorliegende Erfindung betrifft als Kleb- oder Dicht- oder Beschichtungsstoffe geeignete chemisch oder physikalisch härtbare Zusammensetzungen, die-mindestens ein Bindemittel ausgewählt aus der Gruppe bestehend aus vernetzbaren oder polymerisierbaren Monomeren, Präpolymeren oder Polymeren sowie mindestens einen Füllstoff enthalten.

Kleb-, Dicht- und Beschichtungsstoffe enthalten in der Regel neben Bindemitteln sowie gegebenenfalls Pigmenten und Lösemitteln auch Füllstoffe. Diese Füllstoffe werden zu unterschiedlichen Zwecken eingesetzt. Durch die Art und die Menge der eingesetzten Füllstoffe kann beispielsweise die Viskosität der Zusammensetzungen eingestellt werden. Vielfach wird auch das Fließverhalten durch die Füllstoffe beeinflußt, d. h. sie wirken als Rheologiesteuerungsmittel. Nach der Aushärtung der Kleb-, Dicht- und Beschichtungsstoffe haben die Füllstoffe auch Einfluß auf die physikalischen und chemischen Eigenschaften des ausgehärteten Endprodukts. So werden beispielsweise die Festigkeit, die Elastizität, die Abbriebbeständigkeit, das Brandverhalten und weitere Eigenschaften von ausgehärteten polymeren Massen durch die Art und die Mengen der in ihnen enthaltenden Füllstoffe beeinflußt.

Ein wichtiger Füllstoff ist feinteiliges Siliciumdioxid. Es wird beispielsweise in Siliconkautschukzusammensetzungen oder Lacken verwendet. Siliciumdioxid hat jedoch einige Nachteile. Einerseits ist dieses Material relativ teuer und andererseits kann es im praktischen Gebrauch bei vielen Zusammensetzungen nur bis zu einem Anteil von etwas 20 Gew.-% eingesetzt werden. Bei Einsatz höherer Mengen steigt die Viskosität der Zusammensetzungen so stark an, daß diese nicht mehr verarbeitbar sind.

Es ist Aufgabe der vorliegenden Erfindung, Kleb-, Dicht- und Beschichtungsstoffe der eingangs genannten Art anzugeben, bei denen das Siliciumdioxid mindestens teilweise durch einen anderen Füllstoff ersetzt ist, der kostengünstiger ist und gleichzeitig zu verbesserten technischen Eigenschaften der Zusammensetzungen führt. Überraschenderweise wurde nun gefunden, daß diese Aufgabe dadurch gelöst werden kann, daß mindestens ein Teil des Füllstoffs aus zerkleinertem geschäumten Glas besteht, das in bestimmter Menge und bestimmter Teilchengröße in den Zusammensetzungen enthalten ist.

Gegenstand der vorliegenden Erfindung sind daher Kleb- oder Dicht- oder Beschichtungsstoffe der eingangs genannten Art, die dadurch gekennzeichnet sind, daß der Füllstoffanteil 0,2 bis 70 Gew.-% bezogen auf das Gesamtgewicht der Zusammensetzungen beträgt und mindestens ein Teil des Füllstoffs aus Glaspartikeln mit einer Teilchengröße von 100 nm bis 20 µm besteht, die durch Zerkleinern, von aufgeschäumtem neutralem oder alkalischem Glas erhalten worden sind. Dabei besteht der Füllstoff zu 10 bis 100 Gew.-% aus den genannten Glaspartikeln, bevorzugt zu 50 bis 100 Gew.-%, besonders bevorzugt zu 100 Gew.-%

Der Begriff neutrales oder alkalisches Glas ist folgendermaßen zu verstehen: Wenn man die Glaspartikel in Wasser einbringt und so eine Dispersion mit einem Anteil von 4 Gew.-% Glaspartikel herstellt, stellt sich ein bestimmter pH-Wert ein. Ist dieser pH-Wert 7, so handelt es sich um ein neutrales Glas. Gläser, die einen pH-Wert oberhalb von 7 ergeben, sind alkalische Gläser. Ein neutraler pH-Wert kann auch durch eine Mischung von saurem und alkalischem Glas erhalten werden. Eine solche Mischung ist auch als neutrales Glas im Sinne der vorliegenden Erfindung zu verstehen.

Zur Herstellung der Glaspartikel kann entweder Recyclingglas oder eigens für die Herstellung der Glaspartikel hergestelltes neues Glas verwendet werden. Im letzteren Fall ist es möglich, die Eigenschaften der Glaspartikel durch die Zusammensetzung des Glases gezielt zu steuern. So können dem Glas Zuschlagsstoffe zugesetzt werden, die die Eigenschaften der Glaspartikel als Füllstoff positiv beeinflussen.

Glaspartikel, die durch Zerkleinern von aufgeschäumtem Glas erhältlich sind und ihre Herstellung werden in der deutschen Offenlegungsschrift DE 102 52 693 A1 beschrieben. Es handelt sich um plättchenförmige und/oder dreidimensionale, unregelmäßig oder regelmäßig geformte Glaspartikel. Sie werden dadurch herstellt, daß unter Druck stehendem geschmolzenem Glas mindestens ein Treibmittel zugegeben wird, anschließend eine Druckminderung durchgeführt wird und danach der bei der Druckminderung und Entspannung entstehende Schaum zu Glaspartikeln zerkleinert wird.

Wenn bei den erfindungsgemäßen Zusammensetzungen die üblicherweise eingesetzte hochdisperse Kieselsäure vollständig durch die genannten Glaspartikel ersetzt wird, kann das Glaspulver bis zu einem Gehalt von ca. 70 Gew.-% verwendet werden. Es ist als überraschend anzusehen, daß das Glaspulver nicht zu einer Zerstörung der Polymermatrix der ausgehärteten Zusammensetzungen führt, sondern die physikalischen und chemischen Eigenschaften derselben in vielfältiger Weise verbessert werden.

In einer vorteilhaften Ausgestaltung der vorliegenden Erfindung ist die Oberfläche der Glaspartikel chemisch modifiziert. Hierdurch ist es möglich, die Wechselwirkungen zwischen den Glaspartikeln und der umgebenden Polymermatrix im ausgehärteten Produkt vorteilhaft zu beeinflussen. Beispielsweise kann die Oberfläche silanisiert sein.

Weitere vorteilhafte Ausführungsformen ergeben sich aus den Unteransprüchen.

Im folgenden werden vorteilhafte Zusammensetzungen näher erläutert, in die erfindungsgemäß die oben genannten Glaspartikel eingearbeitet werden.

Die Zusammensetzungen können vorteilhaft als vernetzbare Monomere Zwei-Cyanoacrylsäureester enthalten. In diesem Fall handelt es sich um sogenannte Cyanacrylat-Klebstoffe. Dies sind einkomponentige Reaktionsklebstoffe auf der Basis von monomeren 2-Cyanoacrylsäureestern. Sie haben sich den Markt durch ihre äußerst schnelle Aushärtung erobert, die je nach Substrat nur wenige Sekunden erfordert. Die resultierenden Eigenschaften erfüllen viele der in der industriellen Praxis gestellten Anforderungen. Durch den Zusatz von Glaspartikeln entsprechend der vorliegenden Erfindung werden die Zähelastifizierung, die Schälfestigkeit, die Wärmebeständigkeit, die Zugscherfestigkeit und die Zugfestigkeit von Cyanacrylat-Klebstoffen verbessert.

Geeignete 2-Cyanacrylsäurester in Cyanacrylat-Klebstoffen sind Stoffe der allgemeinen Formel

H₂C=C(CN)-CO-O-R

Die Cyanacrylat-Klebstoffe können weiterhin 2-Cyano-Pentadiensäureester sowie den Zusatz einer wirksamen Menge mindestens eines Alkylen-bis(2-Pentadienoats) enthalten. Derartige Cyanacrylat-Klebstoffe sind aus der DE 19640 202-A1 bekannt. Sie weisen eine erhöhte Wärmefestigkeit auf.

Eine weitere vorteilhafte Ausgestaltung der vorliegenden Erfindung ist durch strahlungshärtbare, Cyanoacrylat enthaltende Zusammensetzungen .gegeben. Beispielsweise sind in der DE 198 80 965 T1 Zusammensetzungen beschrieben, die eine Cyanoacrylat-Komponente, eine Metallocen-Komponente und eine Photoinitiator-Komponente umfassen.

Die erfindungsgemäßen Cyanacrylat-Klebstoffe können weiterhin neben einer Cyanoacrylat-Komponente eine erste Beschteunigerkomponente enthalten, die ausgewählt ist aus der Gruppe bestehend aus Calixarenen und Oxacalixarenen, Silicium enthaltenden Kronenethern, Cylcodextrinen und Kombinationen davon und eine zweite Beschleunigerkomponente, die ausgewählt ist aus der Gruppe bestehend aus Poly(ethylenglykol)di(meth)acrylaten, .ethoxylierten Verbindungen und Kombinationen davon. Diese Klebstoffe härten besonders schnell aus. Sie sind beschrieben in dem US-Patent US 6 294 629 B1.

Eine weitere vorteilhafte Ausgestaltung bilden Einkomponentenklebstoffzusammensetzungen, die ein Cyanoacrylatmonomer, wenigstens ein Plastifizierungsmittel und wenigstens ein Silan umfassen mit der Maßgabe, daß das Siliciumatom des Silans nicht einen Teil eines Silakronenrings bildet. Diese Klebstoffe sind insbesondere zum Kleben von Glas geeignet und sind beschrieben in dem europäischen Patent EP 0 918 832 B1.

Eine weitere bevorzugte Ausführungsform der erfindungsgemäßen Cyanacrylat-Klebstoffe sind solche, die einen Ester-Zusatz enthalten, wobei als Ester mindestens ein Teil- und/oder Voll-Ester aus ein- oder mehrwertigen aliphatischen Carbonsäuren mit 1-5 direkt miteinander verbundenen C-Atomen und ein- bis fünfwertigen aliphatischem Alkohol mit 1-5 direkt miteinander verbundenen C-Atomen verwendet wird und wobei die Anzahl der direkt miteinander verbundenen C-Atomen in den weiteren aliphatischen Gruppen maximal 3 beträgt, wenn eine aliphatische Gruppe 4 oder 5 C-Atome enthält. Diese Klebstoffe sind gekennzeichnet durch einen Polymergehalt von 1-60 Gew.-% bezogen auf den Klebstoff insgesamt. Sie werden beschrieben in der Patentanmeldung DE 197 52 893 A1. Sie-weisen eine gute Lagerstabilität, brauchbare Festigkeiten und eine praktisch unveränderte Abbindegeschwindigkeit auf.

Ein weiteres Beispiel für einen erfindungsgemäßen Klebstoff ist ein fluoreszierender Cyanacrylat-Klebstoff, der ein Pyrylium-Salz enthält. Derartige Klebstoffe sind zum Verkleben von gleichen oder verschiedenen Werkstoffen aus Metall, Elastomeren und Kunststoffen, insbesondere auch zum Verkleben von transparenten Fügeteilen aus Polystyrol, Polymethylmethacrylat und Polycarbonat geeignet. Sie sind beschrieben in der Patentanmeldung DE 196 44 332 A1.

Ein weiteres Beispiel für einen erfindungsgemäßen Klebstoff ist ein Cyanacrylat-Klebstoff mit einem Ester-Zusatz, der dadurch gekennzeichnet ist, daß als Ester mindestens ein Teil- und/oder Voll-Ester aus ein- oder mehrwertigen aliphatischen Carbonsäuren mit 1-5 direkt miteinander verbundenen C-Atomen und ein- bis fünfwertigen aliphatischen Alkohol mit 1-5 direkt miteinander verbundenen C-Atomen verwendet wird, wobei die Anzahl der direkt miteinander verbundenen C-Atome in den weiteren aliphatischen Gruppen maximal 3 beträgt, wenn eine aliphatische Gruppe 4 oder 5 C-Atome enthält, wobei der Ester-Zusatz frei von Alkali-Metallen und Aminen ist. Diese Klebstoffe sind beschrieben in dem Patent EP 0 904 328 B1.

Die erfindungsgemäßen Cyanacrylat-Klebstoffe können weiterhin als Inhibitor gegen anionische Polymerisation 2-Oxo-1,3,2-Dioxathiolane in Mengen von 50-5000 ppm enthalten. Dieser Inhibitor bewirkt, daß die Abbindezeit sich über die Lagerdauer drastisch verlängert. Weiterhin werden Verfärbungen des Klebstoffs bei der Lagerung verhindert. Derartige Klebstoffe sind beschrieben in dem europäischen Patent EP 1 034 223 B1.

Ein weiterer geeigneter Klebstoff enthält wenigstens eine Cyanoacrylat-Monomerkomponente, die ausgewählt ist aus Ethylcyanoacrylat oder Methoxycyanoacrylat und wenigstens eine Cyanoacrylat-Monomerkomponente in einer Menge von mehr als 12 Gew.-% bezogen auf das Gesamtgewicht der Kombination, die ausgewählt ist aus der Gruppe bestehend aus n-Propyl-cyanoacrylat, iso-Propyl-cyanoacrylat, n-Butyl-cyanoacrylat, sec.-Butyl-cyanoacrylat, iso-Butyl-cyanoacrylat, tert-Butyl-cyanoacrylat, n-Pentyl-cyanoacrylat, 1-Methyl-butyl-cyanoacrylat, 1-Ethyl-propyl-cyanoacrylat, Neopentyl-cyanoacrylat, n-Hexylcyanoacrylat, 1-Methyl-pentyl-cyanoacrylat, n-Heptyl-cyanoacrylat, n-Octylcyanoacrylat, n-Nonyl-cyanoacrylat, n-Decyl-cyanoacrylat, n-Undecyl-cyanoacrylat, n-Dodecyl-cyanoacrylat, Cyclohexyl-cyanoacrylat; Benzyl-cyanoacrylat, Phenylcyanoacrylat, Tetrahydrofurfuryl-cyanoacrylat, Allyl-cyanoacrylat, Propargylcyanoacrylat, 2-Butenyl-cyanoacrylat, Phenethyl-cyanoacrylat, Chloropropylcyanoacrylat, Ethoxyethyl-cyanoacrylat, Ethoxypropyl-cyanoacrylat, Ethoxy-Isopropyl-cyanoacrylat, Propoxyethyl-cyanoacrylat, Isopropoxyethyl-cyanoacrylat, Butoxyethyl-cyanoacrylat, Methoxypropyl-cyanoacrylat, Methoxy-isopropylcyanoacrylat, Methoxy-butyl-cyanoacrylat, Propoxymethyl-cyanoacrylat, Propoxyethyl-cyanoacrylat, Propoxy-propyl-cyanoacrylat, Butoxymethyl-cyanoacrylat, Butoxyethyl-cyanoacrylat, Butoxypropyl-cyanoacrylat, Butoxyisopropyl-cyanoacrylat, Butoxy-butyl-cyanoacrylat, iso-Nonyl-cyanoacrylat, iso-Decyl-cyanoacrylat, Cyclohexyl-methyl-cyanoacrylat, Naphtyl-cyanoacrylat, 2-(2'-Methoxy)-ethoxy-ethylcyanoacrylat, 2-(2'-Ethoxy)-ethoxy-ethyl-cyanoacrylat, 2-(2'-Propyloxy)-ethoxy-ethylcyanoacrylat, 2-(2'-butyloxy)-ethoxy-ethyl-cyanoacrylat, 2-(2'-pentyloxy)-ethoxy-ethylcyanoacrylat, 2-(2'-Hexyloxy)-ethoxy-ethyl-cyanoacrylat, 2-(2'-Methoxy)-propyloxy-propyl-cyanoacrylat, 2-(2'-Ethoxy)-propyloxy-propyl-cyanoacrylat, 2-(2'-Propyloxy)-propyloxy-propyl-cyanoacrylat, 2-(2'-Pentyloxy)-propyloxy-propyl-cyanoacrylat, 2-(2'-Hexyloxy)-propyloxy-propyl-cyanoacrylat, 2-(2'-methoxy)-butyloxy-butyl-cyanoacrylat, 2-(2'-Ethoxy)-butyloxy-butyl-cyanoacrylat, 2-(2'-Butyloxy)-butyloxy-butyl-cyanoacrylat, 2-(3'-Methoxy)-propyloxy-ethyl-cyanoacrylat, 2-(3'-Methoxy)-butyloxy-ethylcyanoacrylat, 2-(3'-Methoxy)-propyloxy-propyl-cyanoacrylat, 2-(3'-Methoxy)-butyloxy-propyl-cyanoacrylat, 2-(2'-Methoxy)-ethoxy-propyl-cyanoacrylat, 2-(2'-Methoxy)-ethoxy-butyl-cyanoacrylat. Die Zusammensetzung enthält weiterhin wenigstens eine Weichmacherkomponente, die in eine Menge von ungefähr 15 bis ungefähr 40 Gew.-% bezogen auf die gesamte Zusammensetzung enthalten ist. Diese Klebstoffe sind beschrieben in der Patentanmeldung WO 02/053666 A1.

Weiterhin können die Klebstoffe neben einer Cyanoacrylatkomponente einen Beschleuniger enthalten, der durch die folgende chemische Struktur charakterisiert ist 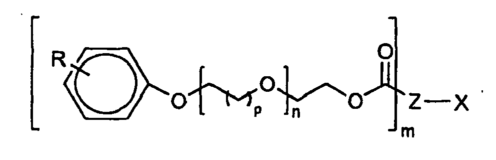 in der R ein Rest ist der ausgewählt ist aus der Gruppe bestehend aus Wasserstoff, Alkyl, Alkoxy, Alkylthioethern, Halogenalkyl, Carboxylsäuren und Estern davon, Sulfin-, Sulfon- und Schwefelsäuren und deren Estern, Phosphin-, Phosphon- und Phosphorsäuren und deren Estern, X ein aromatischer Kohlenwasserstoffrest ist, der substituiert sein kann mit Sauerstoff oder Schwefel, Z eine Einfach- oder Doppelbindung ist, n = 1-12, m = 1-4 und p = 1-3 ist. Derartige Cyanacrylat-Klebstoffe werden beschrieben in dem US-Patent US 6,835,789.

Eine weitere vorteilhafte Ausgestaltung der Erfindung ist durch Klebstoff auf der Basis von α-Cyanacrylsäureestern gegeben, die ein Pyrylium-Salz enthalten. Hierdurch wird es möglich, einen Farbstoff ein hoher Konzentration den Cyanacrylsäureestern zuzusetzen, ohne damit die Lagerstabilität und die Klebeeigenschaften merklich zu verschlechtern. Es lassen sich Stammlösungen herstellen, mit denen Cyanacrylat-Klebstoffe entsprechend der jeweiligen Anwendung mühelos gefärbt werden können. Derartige Klebstoffe sind beschrieben in der WO 98/18876.

Die Cyanacrylat-Klebstoffe können weiterhin als Inhibitor gegen anionische Polymerisation 2-Oxo-1,3,2-dioxathiolane enthalten, wie dies in der WO 99/25774 beschrieben ist. Hierdurch wird bei zuverlässiger Inhibitorwirkung einer Verlängerung der Abbindezeit nach Lagerung entgegengewirkt.

Eine verbesserte Zähigkeit der gehärteten Cyanacrylat-Klebstoffe wird erreicht durch ein elastomeres Copolymer als Zähigkeitsadditiv, welches ein Reaktionsprodukt eines C₂₋₂₀-Olefins und eines (Meth)acrylatesters ist, wie es beschrieben ist in US 6 822 052 B2.

Thermostabile Cyanacrylat-Verklebung insbesondere von elektrischen, elektronischen oder optischen Bauteilen ergeben sich durch Cyanacrylat-Klebstoffzusammensetzungen auf der Basis von Estern der Monocyanoacrylsäure der allgemeinen Formel

H₂C==C(CN)-CO- Q-R

in der R eine Alkyl-, Alkenyl-, Cycloalkyl-, Aryl-, Alkoxyalkyl-, Aralkyl- oder Haloalkygruppe ist, wobei die Klebstoffzusammensetzung Diisocyanate und Bisphenole enthält, wie dies in der EP 1 005 513 B1 beschrieben ist.

Eine weitere bevorzugte Klebstoffzusammensetzung enthält eine Cyanoacrylatkomponente und eine Beschleunigungskomponente, die im wesentlichen besteht aus Calixarenen, Oxacalixarenen oder einer Kombination davon und weiterhin wenigstens einem Kronenäther. Klebstoffe dieser Art sind beschrieben in US 6 475 331 B1.

Eine weitere vorteilhafte Cyanacrylat-Klebemittelzusammensetzung mit verminderter Haftung auf Haut weist einen Gehalt an mindestens einer Verbindung der folgenden Gruppen A bis D und einem anionischen Polymerisationsbeschleuniger auf:
A: Aliphatischer Alkohol mit einer aliphatischen Gruppe, in der 6 oder mehr Kohlenstoffatome direkt miteinander verbunden sind;
B: Aliphatischer Carbonsäureester mit einer aliphatischen Gruppe, in der 6 oder mehr Kohlenstoffatome direkt miteinander verbunden sind;
C: Aliphatischer Carbonsäureester mit mindestens zwei aliphatischen Gruppen, in denen 4 oder mehr Kohlenstoffatome direkt miteinander verbunden sind; und
D: Carbonsäureester einer carbocyklischen Verbindung, die in einem Carbonsäurerest oder Alkoholrest eine aliphatische Gruppe aufweist, in der 5 oder mehr Kohlenstoffatome direkt miteinander verbunden sind.
Diese Klebstoffe sind beschrieben in der Offenlegungsschrift DE 43 17 886 A1.

Eine beschleunigte Aushärtung der Cyanacrylat-Klebstoffe läßt sich erreichen durch die Verwendung von organischen Verbindungen, die das Strukturelement

-N=C-S-S-C=N-

aufweisen, als Aktivatoren, wie es beschrieben ist in WO 00/39229.

Neben den Cyanacrylat-Klebstoffen sind Zusammensetzungen, die als Bindemittel ein Polyurethan-Bindemittel auf Basis mindestens eines Polyisocyanats und mindestens eines Polyols und/oder Polyamins eine weitere vorteilhafte Ausgestaltung der erfindungsgemäßen Zusammensetzung. Sie eignen sich zur Herstellung von Klebstoffen und Formmassen. Die Formmassen können kompakte Massen sein oder, wenn sie zusätzlich ein Treibmittel enthalten, Schaumstoffe. Bei den Bindemitteln kann es sich um Einkomponenten- oder Zweikomponenten-Polyurethan-Bindemittel handeln.

Die Zweikomponenten-Polyurethan-Bindemittel bestehen im wesentlichen aus einem Reaktionsprodukt mindestens eines Polyols bzw. Polyamins mit mindestens einem Polyisocyanat, wobei zur Herstellung von Schaumstoffen zur Porenbildung als Treibmittel noch mindestens eine Carbonsäure sowie gegebenenfalls noch Wasser hinzukommen. Anstelle von Polyolen bzw. Polyaminen und Carbonsäuren können auch Hydroxycarbonsäuren bzw. Aminocarbonsäuren eingesetzt werden, wobei deren Funktionalität auch größer als 1 sein kann.

Die Polyisocyanate sind mehrfunktionell. Vorzugsweise enthalten die geeigneten mehrfunktionellen Isocyanate im Mittel 2 bis höchstens 5, vorzugsweise bis 4 und insbesondere 2 oder 3 NCO-Gruppen. Beispielsweise seien als geeignete Isocyanate genannt Phenyldiisocyanat, 1,5-Naphthylendiisocyanat, 4,4'-Diphenylmethandiisocyanat (MDI), hydriertes MDI (H₁₂MDI), Xylylendiisocyanat (XDI), m- und p- Tetramethylxylylendiisocyanat (TMXDI), 4,4'-Diphenyldimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), gegebenenfalls in Mischung, 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethyl-cyclohexan (IPDI), chlorierte und bromierte Diisocyanate, phosphorhaltige Diisocyanate, 4,4'-Diisocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Phthalsäure-bisisocyanatoethylester, ferner Polyisocyanate mit reaktionsfähigen Halogenatomen, wie 1-Chlormethylphenyl-2,4-diisocyanat, 1-Brommethylphenyl-2,6-diisocyanat, 3,3-Bis-chlormethylether-4,4'-diphenyldiisocyanat. Schwefelhaltige Polyisocyanate erhält man beispielsweise durch Umsetzung von 2 mol Hexamethylen-diisocyanat mit 1 mol Thioglykol oder Dihydroxydihexylsulfid. Weitere wichtige Diisocyanate sind Trimethylhexamethylendiisocyanat, 1,4-Diisocyanatbutan, 1,12-Diisocyanatododecan und Dimerfettsäurediisocyanat.

Interesse verdienen teilweise verkappte Polyisocyanate, welche die Bildung selbstvernetzender Polyurethane ermöglichen, z. B. dimeres Toluylendiisocyanat, oder mit beispielsweise Phenolen, tertiärem Butanol, Phthalamid, Caprolactam partiell oder vollständig umgesetzte Polyisocyanate.

In einer besonderen Ausführungsform enthält die Isocyanatkomponente anteilsweise Dimerfettsäureisocyanat. Als Dimerfettsäure bezeichnet man ein Gemisch von überwiegend C₃₆-Dicarbonsäuren, das durch thermische oder katalytische Dimerisierung ungesättigter C₁₈-Monocarbonsäuren, wie Ölsäure, Tallölfettsäure oder Linolsäure, hergestellt wird. Derartige Dimerfettsäuren sind dem Fachmann seit langem bekannt und kommerziell erhältlich. Die Dimerfettsäure läßt sich zu Dimerfettsäureisocyanaten umsetzen. Technisches Dimerfettsäurediisocyanat besitzt im Mittel mindestens zwei und weniger als drei Isocyanatgruppen pro Molekül Dimerfettsäure. Vorzugsweise besteht die Isocyanatkomponente a) zu mehr als 30 Gew.-%, insbesondere zumindest überwiegend, vorzugsweise vollständig, aus aromatischen Isocyanaten wie MDI.

Im allgemeinen werden aromatische Isocyanate bevorzugt, ebenso oligomerisierte NCO-endständige Addukte aus den oben genannten Isocyanaten und Polyolen, Polyaminen oder Aminoalkoholen. Jedoch vermögen auch aliphatische und cycloaliphatische Isocyanate schon bei Raumtemperatur schnell und vollständig zu reagieren.

Schließlich können auch Präpolymere eingesetzt werden, also Oligomere mit mehreren Isocyanatgruppen. Sie werden bekanntlich bei einem großen Überschuß von monomerem Polyisocyanant in Gegenwart von z. B. Diolen erhalten. Auch Isocyanuratisatisierungsprodukte des HDI und Biuretisierungsprodukte des HDI sind möglich.

Als Di- oder Polyisocyanate werden vorzugsweise die aromatischen Isocyanate verwendet, z. B. Diphenylmethandiisocyanat, entweder in Form der reinen Isomeren, als Isomerengemisch der 2,4'-/4,4'-Isomeren oder auch das mit Carbodiimid verflüssigte Diphenylmethandiisocyanat (MDI), das z. B. unter dem Handelsnamen Isonate 143 L® bekannt ist, sowie das sogenannte "Roh-MDI", d. h., die Isomeren/Oligomerenmischung des MDI, wie sie z. B. unter dem Handelsnamen PAPI® bzw. Desmodur VK® im Handel erhältlich sind. Weiterhin können sogenannte "Quasi-Präpolymere", d. h. Umsetzungsprodukte des MDI bzw. des Toluylendiisocyanates (TDI) mit niedermolekularen Diolen, wie z. B. Ethylenglykol, Diethyenglykol, Propylenglykol, Dipropylenglykol oder Triethylenglykol, verwendet werden.

Als Polyole für das Bindemittel eignen sich vorzugsweise flüssige Polyhydroxyverbindungen insbesondere mit zwei bzw. drei Hydroxylgruppen pro Polyether- und/oder Polyester-Molekül, wie z. B. di- und/oder trifunktionelle Polypropylenglykole im Molekulargewichtsbereich von 200 bis 6000, vorzugsweise im Bereich von 400 bis 3000. Es können auch statistische und/oder Blockcopolymere des Ethylenoxids und Propylenoxids eingesetzt werden. Eine weitere Gruppe von vorzugsweise einzusetzenden Polyetherpolyolen sind die Polytetramethylenglykole, die z. B. durch die saure Polymerisation von Tetrahydrofuran hergestellt werden. Dabei liegt der Molekulargewichtsbereich der Polytetramethylenglykole zwischen 200 und 6000, vorzugsweise im Bereich von 40 bis 4000.

Weiterhin sind als Polyole die flüssigen Polyester geeignet, die durch Kondensation von Di- bzw. Tricarbonsäuren, wie z. B. Adipinsäure, Sebazinsäure und Glutarsäure, mit niedermolekularen Diolen bzw. Triolen, wie z. B. Etylenglykol, Propylenglykol, Diethylenglykol, Triethylenglykol, Dipropylenglykol, 1,4-Butandiol, 1,6-Hexandiol, Glyzerin oder Trimethylolpropan, hergestellt werden können.

Eine weitere Gruppe der erfindungsgemäß einzusetzenden Polyole sind die Polyester auf der Basis von ε-Caprolacton, auch "Polycaprolactone"-genannt.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weiteregeeignete Polyole sind Polycarbonatpolyole und Dimerdiole (Fa. Henkel) sowie insbesondere Rizinusöl und dessen Derivate. Auch Hydroxy-funktionellen Polybutadiene, wie sie z. B. unter dem Handelsnamen "Polybd"^{®} erhältlich sind, können für die erfindungsgemäßen Zusammensetzungen als Polyole eingesetzt werden.

Insbesondere ist die Polyol-Komponente eine Diol/Triol-Mischung aus Polyether- und Polyester-Polyolen.

Unter einem "Treibmittel" werden nicht nur Treibgase, sondern auch solche Stoffe verstanden, die unter Einwirkung von Wärme oder Chemikalien Treibgase entwickeln. Im vorliegenden Fall reagieren die Carbonsäuren mit Isocyanaten in Gegenwart von Katalysatoren unter Abspaltung von CO₂ zu Amiden.

Unter "Carbonsäuren" werden Säuren verstanden, die eine oder mehrere - vorzugsweise bis zu drei - Carboxyl-Gruppen (-COOH) und mindestens 2, vorzugsweise 5 bis 400 C-Atome enthalten. Die Carboxyl-Gruppen können mit gesättigten oder ungesättigten, linearen oder verzweigten Alkyl- oder Cycloalkyl-Resten oder mit aromatischen Resten verbunden sein. Sie können weitere Gruppen wie Ether-, Ester-, Halogen-, Amid-, Amino-, Hydroxy- und Harnstoffgruppen enthalten. Bevorzugt werden jedoch Carbonsäuren, die als Flüssigkeiten bei Raumtemperatur leicht einarbeitbar sind, wie native Fettsäuren oder Fettsäuregemische, COOH-terminierte Polyester, Polyether oder Polyamide, Dimerfettsäuren und Trimerfettsäuren. Konkrete Beispiele für die Carbonsäuren sind: Essigsäure, Valerian-, Capron-, Capryl-, Caprin-, Laurin-, Myristin-, Palmitin-, Stearin-, Isostearin-, Isopalmitin-, Arachin-, Behen-, Cerotin- und Melissin-Säure sowie die ein- oder mehrfach ungesättigte Säuren Palmitolein-, Öl-, Elaidin-, Petroselin-, Eruca-, Linol-, Linolen- und Gadoleinsäure. Außerdem seien auch noch genannt: Adipinsäure, Sebacinsäure, Isophthalsäure, Terephthalsäure, Trimellitsäure, Phthalsäure, Hexahydrophthalsäure, Tetrachlorphthalsäure, Oxalsäure, Mukonsäure, Bernsteinsäure, Fumarsäure, Ricinolsäure, 12-Hydroxystearinsäure, Zitronensäure, Weinsäure, di- oder trimerisierte ungesättigte Fettsäuren, gegebenenfalls in Mischung mit monomeren ungesättigten Fettsäuren und gegebenenfalls Partialester dieser Verbindungen. Ebenso können auch Ester von Polycarbonsäuren oder Carbonsäuregemischen, die sowohl COOH- als auch OH-Gruppen besitzen, eingesetzt werden wie Ester von TMP [C₂H₅-C(CH₂OH)₃], Glycerin, Pentaerythrit, Sorbit, Glykol bzw. deren Alkoxylate mit Adipinsäure, Sebacinsäure, Zitronensäure, Weinsäure oder gepfropfte oder partiell veresterte Kohlenhydrate (Zucker, Stärke, Cellulose) und Ringöffnungsprodukte von Epoxiden mit Polycarbonsäuren.

Zu den "Carbonsäuren" zählen neben den Amino-Carbonsäuren bevorzugt "Hydroxycarbonsäuren". Unter "Hydroxycarbonsäuren" sind Monohydroxymonocarbonsäuren, Monohydroxypolycarbonsäuren, Polyhydroxymonocarbonsäuren und Polyhydroxypolycarbonsäuren einschließlich der entsprechenden Hydroxyalkoxycarbonsäuren mit 2 bis 600, vorzugsweise mit 8 bis 400 und insbesondere mit 14 bis 120 C-Atomen zu verstehen, die 1 bis 9, vorzugsweise 2 bis 3, Hydroxylgruppen bzw. Carboxylgruppen an einem H-C-Rest, insbesondere an einem aliphatischen Rest enthalten. Die Polyhydroxymonocarbonsäuren und die Polyhydroxypolycarbonsäuren einschließlich der entsprechenden Hydroxyalkoxycarbonsäuren werden zu den Polyhydroxyfettsäuren zusammengefaßt. Die vorzugsweise verwendeten Dihydroxyfettsäuren sowie ihre Herstellung werden in der DE-OS 33 18 596 und der EP 237 959 beschrieben, auf die ausdrücklich Bezug genommen wird.

Die verwendeten Polyhydroxyfettsäuren leiten sich bevorzugt von natürlich vorkommenden Fettsäuren ab. Sie weisen daher in der Regel eine gerade Anzahl an Kohlenstoffatomen in der Hauptkette auf und sind nicht verzweigt. Besonders geeignet sind solche mit einer Kettenlänge von 8 bis 100, insbesondere von 14 bis 22 C-Atomen. Für technische Verwendungen-werden natürliche Fettsäuren meistens als technische Mischungen eingesetzt. Diese Mischungen enthalten vorzugsweise einen Teil an Ölsäure. Sie können darüber hinaus weitere gesättigte, einfach ungesättigte und mehrfach ungesättigte Fettsäuren enthalten. Auch bei der Herstellung der erfindungsgemäß verwendbaren Polyhydroxyfettsäuren bzw. Polyhydroxyalkoxyfettsäuren können prinzipiell Mischungen unterschiedlicher Kettenlänge eingesetzt werden, die auch noch gesättigte Anteile, oder aber Polyhydroxyalkoxycarbonsäuren mit Doppelbindungen enthalten können. Geeignet sind hier also nicht nur die reinen Polyhydroxyfettsäuren, sondern auch Mischprodukte, erhalten aus tierischen Fetten oder pflanzlichen Ölen, die nach Aufbereitung (Esterspaltung, Reinigungsstufen) Gehalte an einfach ungesättigten Fettsäuren > 40%, bevorzugt > 60%, aufweisen. Beispiele hierfür sind käuflich erhältliche, natürliche Rohstoffe wie z. B. Rindertalg mit einer Kettenverteilung von 67% Ölsäure, 2% Stearinsäure, 1 % Heptadecansäure, 10% gesättigte Säuren der Kettenlänge C₁₂ bis C₁₆, 12% Linolsäure und 2% gesättigte Säuren > C₁₈ Kohlenstoffatomen oder z. B. das Öl der neuen Sonnenblume (NSb) mit einer Zusammensetzung von ca. 80% Ölsäure, 5% Stearinsäure, 8% Linolsäure und ca. 7% Palmitinsäure. Diese Produkte können nach Ringöffnung kurz destilliert werden, um die ungesättigten Fettsäureesteranteile zu reduzieren. Weiterführende Reinigungsschritte (z. B. länger anhaltende Destillation) sind ebenfalls möglich.

Bevorzugt leiten sich die verwendeten Polyhydroxyfettsäuren von einfach ungesättigten Fettsäuren ab, z. B. von 4,5-Tetradecensäure, 9,10- Tetradecensäure, 9,10-Pentadecensäure, 9,10-Hexadecensäure, 9,10- Heptadecensäure, 6,7-Octadecensäure, 9,10-Octadecensäure, 11,12- Octadecensäure, 11,12-Eicosensäure, 11,12-Docosensäure, 13,14-Docosensäure, 15,16-Tetracosensäure und 9,10-Ximensäure. Davon bevorzugt ist die Ölsäure (9,10-Octadecensäure). Sowohl cis- als auch trans-Isomere von allen genannten Fettsäuren sind geeignet. Geeignet sind auch Polyhydroxyfettsäuren, die sich von weniger häufig vorkommenden ungesättigten Fettsäuren herleiten, wie Decyl-12-ensäure, Dodecyl-9-ensäure, Rizinolsäure, Petroselinsäure, Vaccensäure, Eläostearinsäure, Punicinsäure, Licansäure, Parinarsäure, Gadoleinsäure, Arachidonsäure, 5-Eicosensäure, 5-Docosensäure, Cetoleinsäure, 5,13- Docosadiensäure und/oder Selacholeinsäure.

Des weiteren sind geeignet Polyhydroxyfettsäuren, die aus Isomerisierungsprodukten natürlicher ungesättigter Fettsäuren hergestellt worden sind. Die so hergestellten Polyhydroxyfettsäuren unterscheiden sich nur durch die Lage der Hydroxy- bzw. der Hydroxyalkoxygruppen im Molekül. Sie liegen im allgemeinen als Gemische vor. Natürlich vorkommende Fettsäuren sind im Sinne natürlicher Rohstoffe bei der vorliegenden Erfindung als Ausgangskomponente zwar bevorzugt, was aber nicht heißt, daß nicht auch synthetisch hergestellte Carbonsäuren mit entsprechenden C-Zahlen geeignet sind.

Ein Hydroxyalkoxyrest der Polyhydroxyfettsäuren leitet sich von dem Polyol ab, das zur Ringöffnung des epoxidierten Fettsäurederivats verwendet worden ist. Bevorzugt werden Polyhydroxyfettsäuren, deren Hydroxyalkoxygruppe sich von vorzugsweise primären difunktionellen Alkoholen mit bis zu 24, insbesondere bis zu 12 C-Atomen ableitet. Geeignete Diole sind Propandiol, Butandiol, Pentandiol und Hexandiol, Dodecandiol, vorzugsweise 1,2-Ethandiol, 1,4-Butandiol, 1,6-Hexandiol, Polypropylenglykol, Polybutandiol und/oder Polyethylenglykol mit einem Polymerisationsgrad von 2 bis 40. Des weiteren sind als Diol-Verbindungen Polypropylenglykol und/oder Polytetrahydrofurandiol sowie deren Mischpolymerisationsprodukte besonders geeignet. Dies gilt insbesondere dann, wenn diese Verbindungen jeweils einen Polymerisationsgrad von etwa 2 bis 20 Einheiten aufweisen. Zur Ringöffnung können aber auch Triole oder noch höherwertige Alkohole eingesetzt werden, z. B. Glycerin und Trimethylolpropan sowie deren Addukte von Ethylenoxid und/oder Propylenoxid mit Molekulargewichten bis zu 1500. Es werden dann Polyhydroxyfettsäuren erhalten mit mehr als 2 Hydroxylgruppen pro Molekül.

Zur Ringöffnung kann anstelle eines Polyols als hydroxylgruppenhaltige Verbindung auch eine Hydroxycarbonsäure eingesetzt werden, z. B. Zitronensäure, Rizinolsäure, 12-Hydroxystearinsäure, Milchsäure. Es entstehen dann Ester-Gruppen anstelle von Ether-Gruppen. Des weiteren können auch Amine, Hydroxylgruppen-tragende Amine bzw. Amincarbonsäuren zur Ringöffnung eingesetzt werden.

Bevorzugt werden jedoch Dihydroxyfettsäuren, insbesondere aus epoxidierten ungesättigten Fettsäuren und Diolen hergestellt. Sie sind bei Raumtemperatur flüssig und lassen sich leicht mit den übrigen Reaktionsteilnehmern mischen. Unter Dihydroxyfettsäuren werden im Sinne der Erfindung sowohl die Ringöffnungsprodukte epoxidierter ungesättigter Fettsäuren mit Wasser als auch die entsprechende Ringöffnungsprodukte mit Diolen und deren Vernetzungsprodukten mit weiteren Epoxidmolekülen verstanden. Die Ringöffnungsprodukte mit Diolen können etwas genauer auch als Dihydroxyalkoxyfettsäuren bezeichnet werden. Dabei sind vorzugsweise die Hydroxygruppen bzw. die Hydroxyalkoxygruppe durch mindestens 1, vorzugsweise mindestens 3, insbesondere mindestens 6, CH₂-Einheiten von der Carboxygruppe getrennt.

Bevorzugte Dihydroxyfettsäuren sind:
9,10-Dihydroxypalmitinsäure, 9,10-Dihydroxystearinsäure und 13,14-Dihydroxybehensäure sowie deren 10,9- bzw. 14,13-Isomere.

Auch mehrfach ungesättigte Fettsäuren sind geeignet, z. B. Linolsäure, Linolensäure und Ricininsäure.

Als konkretes Beispiel für eine aromatische Carbonsäure sei die Zimtsäure genannt.

Bevorzugt sind Carbonsäuren, die aus Fetten herstellbar sind.

Wenn die CO₂-Abspaltung bereits bei Raumtemperatur starten soll, ist es zweckmäßig, Amino-substituierte Pyridine und/oder N-substituierte Imidazole als Katalysatoren zu verwenden. Besonders geeignet sind 1-Methylimidazol, 2- Methyl-1-vinylimidazol, 1-Allylimidazol, 1-Phenylimidazol, 1,2,4,5-Tetramethylimidazol, 1(3-Aminopropyl)imidazol, Pyrimidazol, 4-Dimethylaminopyridin, 4-Pyrrolidinopyridin, 4-Morpholino-pyridin, 4-Methylpyridin und N-Dodecyl-2-Methyl-imidazol.

Die obengenannten Ausgangsstoffe für das PU-Bindemittel, nämlich Polyisocyanat, Polyol, Polyamide, Carbonsäuren und Stoffe-mit mindestens -einer -Hydroxyl-, Amin- oder Carboxyl-Gruppe sowie Katalysatoren, werden in folgenden Mengenverhältnissen eingesetzt: Auf ein Äquivalent Isocyanat kommen 0,1 bis 1, vorzugsweise 0,1 bis 0,8 Äquivalente einer Mischung aus Carbonsäure und Alkohol und 0,0001 bis 0,5, vorzugsweise 0,001 bis 0,1 Äquivalente Amin- Katalysator, wobei das Verhältnis Alkohol : Säure 20 : 1 bis 1 : 20 betragen kann. Für den Fall, daß kein Alkohol oder Polyamin an der Reaktion beteiligt ist, also die Isocyanate mit den Carbonsäuren umgesetzt werden, gilt die Regel: Auf ein Äquivalent Isocyanat kommen 0,1 bis 4, vorzugsweise 0,8 bis 1,4 Äquivalente Carbonsäure und 0,0001 bis 0,5, vorzugsweise 0,001 bis 0,1 Äquivalente tertiäres Amin-Katalysator. Falls also Polycarbonsäuren oder Hydroxy- bzw. Amino-Carbonsäuren eingesetzt werden, kann auf den Zusatz von Polyolen ganz verzichtet werden.

Für den Fäll, daß die mehrwertigen Isocyanate überwiegend mit Hydroxycarbonsäuren umgesetzt werden, sollen die Amine vorzugsweise in einer Konzentration von 0,05 bis 15, insbesondere von 0,5 bis 10 Gew.-% eingesetzt werden, bezogen auf die Summe von Hydroxycarbonsäure und Isocyanat.

Neben den obengenannten Pyridin- und Imidazol-Derivaten können noch weitere Katalysatoren zugesetzt werden, vor allem metallorganische Verbindungen wie Zinn(II)salze von Carbonsäuren, starke Basen wie Alkali-Hydroxide, -Alkoholate und -Phenolate, z. B. Di-n-octyl-Zinn-mercaptid, Dibutylzinn-maleat, -diacetat, - dilaurat, -dichlorid, -bisdodecyl-mercaptid, Zinn-II-acetat, -ethylhexoat und - diethylhexoat oder Blei-phenyl-ethyl-dithiocarbaminat. Die metallorganischen Katalysatoren können auch alleine eingesetzt werden, wenn bestimmte Carbonsäuren verwendet werden, nämlich Hydroxy- und Amino-Carbonsäuren. Als Trimerisierungs-Katalysator sei DABCO TMR-2^{®} usw. der Fa. Air Products genannt, wobei es sich um in Ethylglykol gelöste quaternäre Ammoniumsalze handelt.

Zusätzlich geeignet sind auch aliphatische tertiäre Amine insbesondere bei cyclischer Struktur. Unter den tertiären Aminen sind auch solche geeignet, die zusätzlich noch gegenüber den Isocyanaten reaktive Gruppen tragen, insbesondere Hydroxyl- und/oder Amino-Gruppen. Konkret genannt seien:
Dimethylmonoethanolamin, Diethylmonoethanolamin, Methylethylmonoethanolamin, Triethanolamin, Trimethanolamin, Tripropanolamin, Tributanolamin, Trihexanolamin, Tripentanolamin, Tricyclohexanolamin, Diethanolmethylamin, Diethanolethylamin, Diethanolpropylamin, Diethanolbutylamin, Diethanolpentylamin, Diethanolhexylamin, Diethanolcyclohexylamin, Diethanolphenylamin sowie deren Ethoxylierungs- und Propoxylierungs-Produkte, Diaza-bicyclo-octan (Dabco^{®}), Triethylamin, Dimethylbenzylamin (Desmorapid DB^{®}, BAYER), Bisdimethylaminoethylether (Calalyst A I^{®}, UCC), Tetramethylguanidin, Bisdimethylaminomethyl-phenol, 2,2'-Dimorpholinodiethylether, 2-(2- Dimethylaminoethoxy)ethanol, 2-Dimethylaminoethyl-3-dimethylaminopropylether, Bis(2-dimethylaminoethyl)ether, N,N-Dimethylpiperazin, N-(2-hydroxyethoxyethyl)-2-azanorborane, Texacat DP-914^{®} (Texaco Chemical), N,N,N,N-Tetramethylbutan-1,3-diamin, N,N,N,N-Tetramethylpropan-1,3-diamin und N, N, N, N-Tetramethylhexan-1,6-diamin.

Die Katalysatoren können auch in oligomerisierter oder polymerisierter Form vorliegen, z. B. als N-methyliertes Polyethylenimin.

Wenn Wasser als zusätzliches Treibmittel oder Ketteriverlängerungsmittel verwendet wird, kann es zweckmäßig sein, ein aliphatisches tertiäres Amin als Katalysator zu verwenden. In der Regel wird dann das Wasser in einer Menge vom 0,1 bis 15, insbesondere von 0,3 bis 5 Gew.-%, bezogen auf das,Polyurethan verwendet.

Die PU-Bindemittel des Formkörpers haben neben der Amidgruppe aufgrund der Carbonsäure/Isocyanat-Reaktion noch Harnstoff- Gruppen, wenn die Isocyanate mit H₂O reagieren. Sie enthalten zusätzlich noch Urethan-Gruppen, wenn die Isocyanate mit Polyolen, mit Polyhydroxycarbonsäuren oder mit der Cellulose reagieren; und sie enthalten noch Ester-Gruppen, wenn die Carbonsäuren und Alkohole reagieren.

Die Menge der Reaktionspartner Polyisocyanat, Polyol und Carbonsäure wird so gewählt, daß das Polyisocyanat im Überschuß eingesetzt wird. Das heißt, es liegt ein Äquivalenzverhältnis von NCO- : OH-Gruppen von 5:1, vorzugsweise aber von 2 : 1 bis 1,2 : 1 vor, ganz besonders bevorzugt ist ein Isocyanat-Überschuß von 5 bis 50%.

Die ein Zweikomponenten-Polyurethan-Bindemittel enthaltenen Zusammensetzungen können vorteilhaft neben den Glaspartikeln als weiteren Füllstoff Holzteilchen und/oder cellulosehaltiges Material enthalten. Diese Massen eignen sich gut zur Herstellung von Formkörpern. Sie sind beispielsweise beschrieben in der Patentschrift DE 197 56 154 C1 und der Patentschrift EP 0 839 083 B1.

Gemäß einer weiteren vorteilhaften Ausgestaltung können die Zusammensetzungen als Bindemittel eine Dispersion auf der Basis von Polyvinylacetat, Polyacrylat, Polybutadienstyrol, Polyvinyliden, Polyurethan, Polychloropren, Kautschuk, Vinylacetat-Acrylat-Copolymeren, Maleinaten oder Polyolefinen enthalten. Diese Massen eignen sich als sogenannte Dispersionskleber.

Die erfindungsgemäßen Zusammensetzungen können vorteilhaft als Bindemittel auch einen Schmelzklebstoff enthalten, der vorzugsweise ausgewählt ist aus der Gruppe bestehend aus druckempfindlichen Klebstoffen, Polyolefinen, Ethylenvinylacetetcopolymeren, Polyamiden, Polyurethanen, silanterminierten Polyurethanen und silanterminierten Polyamiden.

Ein feuchtigkeitshärtender Polyurethan-Schmelzkleber ist beispielsweise beschrieben in der Patentschrift DE 698 07 928 T2. Feuchtigkeitshärtende oder feuchtigkeitsvernetzende Polyurethan-Schmelzkleber sind Klebstoffe, die bei Raumtemperatur fest sind und in Form einer Schmelze aufgetragen werden, wobei ihre Polymerkomponenten Urethangruppen und reaktive Isocyanatgruppen umfassen. Das Abkühlen der Schmelze bewirkt zunächst ein schnelles physikalisches Abbinden des Klebstoffs, an das sich eine chemische Reaktion der noch vorhandenen Isocyanatgruppen mit Feuchtigkeit zu einem vernetzen nunmehr unschmelzbaren Kleber anschließt. Erst nach dieser chemischen Aushärtung mit der Feuchtigkeit, die von einer Zunahme der Molekülgröße und/oder Vernetzung begleitet wird, nimmt der Kleber seine endgültigen Eigenschaften an. Polyurethan-Schmelzkleber im engeren Sinne sind im wesentlichen lösemittelfrei. Die aus der genannten Patentschrift bekannte Polyurethan-Schmelzkleberzusammensetzung umfaßt das Produkt der Kombination folgender Bestandteile:
a) 95-3 Gew.-% des Reaktionsprodukts eines ersten Polyisocyanats und eines Polymers aus ethylenisch ungesättigten Monomeren mit einem Molekulargewicht unter 60000, wobei diese Polymer aktive Wasserstoffgruppen aufweist und kein Copolymer von Ethylen, Vinylacetat und einem ethylenisch ungesättigten Monomer mit mindestens einer primären Hydroxylgruppe ist;
b) 5-90 Gew.-% mindestens eines Polyurethan-Präpolymers mit freien Isocyanatgruppen, hergestellt aus mindestens einem Polyol aus der Gruppe der Polyesterdiole, Polyestertriole, Polyesterpolyole, aromatischen Polyole und deren Gemische sowie mindestens einem zweiten Polyisocyanat, das mit dem ersten Polyisocyanat identisch oder von diesem verschieden sein kann, und
c) 0-40 Gew.-% mindestens eines Additivs aus der Gruppe der Katalysatoren, Klebrigmacher, Weichmacher, Füller, Pigmente, Stabilisatoren, Haftverbesserer, Rheologieverbesserer und Mischungen derselben, und zwar dergestalt, daß die Summe aus a), b) und c) insgesamt 100 Gew.-% ergibt.

In einer weiteren vorteilhaften Ausgestaltung der Erfindung können die Zusammensetzungen Epoxidharze als Bindemittel enthalten. Hierbei kann es sich um Standardepoxidharze in Kombination mit den bekannten Härtern handeln, beispielsweise Polyaminen. Die Zusammensetzungen können aber auch modifizierte Epoxidharze oder spezielle weitere Bestandteile enthalten, wie es im folgenden beschrieben wird. Durch den erfindungsgemäßen Zusatz der Glaspartikel wird eine Zähelastifizierung erreicht, die Bruchfestigkeit, das Elastizitätsmodul und das Schubmodul sowie die elektrischen Eigenschaften werden verbessert.

Eine bevorzugte Zusammensetzung, deren Eigenschaften durch die Glaspartikel verbessert werden, ist in dem Patent EP 1 272 587 B1 beschrieben. Die Zusammensetzung enthält
A) mindestens ein Epoxidharz mit durchschnittlich mehr als einer Epoxidgruppe pro Molekül
B) ein Copolymeres mit einer Glasübergangstemperatur von -30°C oder niedriger und gegenüber Epoxiden reaktiven Gruppen oder ein Umsetzungsprodukt dieses Copolymeren mit einem stöchiometrischen Überschuß eines Epoxidharzes gemäß A)
C) einen latenten, bei erhöhter Temperatur aktivierbaren Härter für Komponente A), und entweder
D) ein Reaktionsprodukt herstellbar aus einem difunktionellen aminoterminierten Polymer und einem Tri- oder Tetracarbonsäureanhydrid, gekennzeichnet durch im Mittel mehr als eine Imidgruppe und Carboxylgruppe pro Molekül, oder
E) ein Reaktionsprodukt herstellbar aus einem tri- oder mehrfunktionellen Polyol oder einem tri- oder mehrfunktionellen aminoterminierten Polymer und einem cyclischen Carbonsäureanhydrid, wobei das Reaktionsprodukt im Mittel mehr als eine Carboxylgruppe pro Molekül enthält, oder
F) eine Mischung der Reaktionsprodukte gemäß.D) und E).

Die Zusammensetzungen sind als hochfester, schlagfester Strukturklebstoff im Fahrzeugbau, Flugzeugbau oder Schienenfahrzeugbau verwendbar. Mit ihnen können Innenversteifungen von Hohlräumen im Fahrzeugbau gebildet werden sowie versteifende Beschichtungen für dünnwandige Bleche oder Kunststoffbauteile hergestellt werden. Die Massen eignen sich außerdem als Verbundwerkstoffe, als Vergußmassen in der Elektro- bzw. Elektronikindustrie sowie als Klebstoff bei der Herstellung von Leiterplatten in der Elektronikindustrie.

Eine weitere bevorzugte Zusammensetzung umfaßt gemäß der Patentanmeldung EP1 359 2.02 A1 mindestens ein Epoxidharz A mit durchschnittlich mehr als einer Epoxidgruppe pro Molekül, mindestens ein Epoxid-Addukt B mit je durchschnittlich mehr als einer Epoxidgruppe pro Molekül, mindestens ein Thixotropiermittel C, auf Basis von Harnstoffderivat in einem nicht-diffundierenden Trägermaterial und mindestens einen Härter D für Epoxidharze, welcher durch erhöhte Temperatur aktiviert wird. Das Epoxidharz A ist ein Flüssigharz, insbesondere ein Bisphenol-A-Diglycidylether, Bisphenol-F-Diglycidylether oder Bisphenol-A/F-Diglycidylether. Das Epoxid-Addukt B ist vorteilhaft ein Epoxid-Addukt B1, welches aus mindestens einer Dicarbonsäure und mindestens einem Diglycidylether erhältlich ist und gegebenenfalls kombiniert ist mit einem Epoxid-Addukt E2, welches aus mindestens einem Bis(aminophenyl)sulfon-Isomeren oder mindestens einem aromatischen Alkohol und mindestens einem Diglydicylether erhältlich ist. Der Härter D kann ein latenter Härter aus der Gruppe Dicyandiamid, Guanamine, Guanidine und Aminoguanidine sein. Bei den Zusammensetzungen handelt es sich um bei Raumtemperatur stabile, einkomponentige hitzehärtende Zusammensetzung, insbesondere Klebstoffe und Schmelzklebstoffe, welche einerseits eine hohe Festigkeit und andererseits eine hohe Glasübergangstemperatur aufweisen. Sie eignen sich zur Verklebung von Fahrzeugteilen.

Eine weitere Epoxid-Zusammensetzung, wie sie in dem Patent US 6 486 256 B1 beschrieben ist, umfaßt einen Kettenverlängerer, einen basischen Katalysator, ein reaktives Epoxidharz, das nicht wesentlich kettenverlängert ist und einen polymeren Zähelastifizierer.

Aus der Patentschrift EP 0 3.08 664 B1 sind weiterhin modifizierte Epoxidharze bekannt, deren Eigenschaften durch den Zusatz der Glaspartikel ebenfalls verbessert werden können. Es handelt sich um Gemische aus speziellen Dien-Copolymeren und Phenol-terminierten Polyurethanen oder Polyharnstoffen, Gemische dieses Typs enthaltend Epoxidharze und/oder Addukte von Epoxidharzen an das Dien-Copolymere und/oder das Polyurethan oder den Polyharnstoff. Die Copolymere basieren auf mindestens einem 1,3-Dien und mindestens einem polaren, ethylenisch ungesättigten Comonomeren. Bei der Härtung dieser Zusammensetzungen entstehen hochflexible Produkte.

Auf der Basis von Epoxidharzen können auch reaktive Schmelzklebstoffe hergestellt werden. Die Patenschrift EP 0 591 307 B1 beschreibt einen solchen Schmelzklebstoff, der eine oder mehrere Epoxidharzkomponenten, mindestens einen thermisch aktivierbaren latenten Härter für die Harzkomponente sowie gegebenenfalls Beschleuniger, Füllstoffe, Thixotropie-Hilfsmittel und weitere übliche Zusatzstoffe enthält, wobei die Harzkomponente ein Umsetzungsprodukt von 0,5-1 Äquivalenten eines bei Raumtemperatur festen, aus Bisphenol A und/oder Bisphenol F und Epichlorhydrin hergestellten Epoxidharzes mit einem Epoxid-Äquivalentgewicht von 400-700, 0,5-1 Äquivalenten eines bei Raumtemperatur flüssigen, aus Bisphenol A und/der Bisphenol F und Epichlorhydrin hergestellten Epoxidharzes mit einem Epoxid-Äquivalentgewicht von 150-220 und 0,125-0,5 Äquivalenten Amino-terminierter Polyethylen- oder Polypropylenglykole ist. Die Epoxidharze liegen in einer solchen Menge vor, daß ein stöchiometrischer Überschuß von mindestens einem Äquivalent an Epoxidgruppen gegenüber den Aminogruppen gewährleistet ist. Die Schmelzklebstoffe weisen eine ausreichende Flexibilität und eine erhöhte Schälfestigkeit nicht nur bei Raumtemperatur, sondern auch bei tiefen Temperaturen unter 0°C auf. Diese Verbesserung wird ohne Beeinträchtigung der Zugscherfestigkeit erzielt. Darüber hinaus haben die reaktiven Schmelzklebstoffe vor dem Aushärten eine ausreichende Auswaschbeständigkeit.

Aus der Patentanmeldung US 2003/0196753 A1 sind weiterhin härtbare Klebstoffe bekannt, die folgende Bestandteile enthalten: Ein Präpolymer auf Epoxidbasis, das das Reaktionsprodukt eines Epoxidharzes und eines Reaktionspartners ist, der ausgewählt ist aus der Gruppe bestehend aus Amino-terminierten Polyethern, Harzen auf Basis von Carboxylgruppen enthaltenden 1,3-Dienen und polaren ungesättigten Comonomeren und Mischungen davon und weiterhin ein Acrylterminiertes Urethanharz, das das Reaktionsprodukt eines polyfunktionalen Isocyanats eines Polyols und eines Isocyanat reaktiven (Meth)Acrylats ist und weiterhin einen hitzeaktivierbaren latenten Härter. Die ausgehärteten Produkte haben eine verbesserte Schlagzähigkeit und eine große Breite ihrer Anwendungsmöglichkeiten.

Aus dem Patent US 6 632 893 B2 ist eine hitzehärtende Harzzusammensetzung bekannt, die ca. 100 Teile einer Epoxidharzkomponente, bis zu 30. Teile eines latenten Härters, der eine Cyanatesterkomponente und eine Imidazolkomponente enthält, und eine zähelastifizierende Komponente auf Basis eines Polysulfids enthält. Die Zusammensetzungen eignen sich zum Verkleben von Elektronikteilen.

Das Patent US 6 911 109 B2 beschreibt eine zweikomponentige, bei Raumtemperatur härtbare Zusammensetzung, die als erste Komponente ein Epoxidharz und eine (Meth)Acrylatkomponente und als zweite Komponente einen Epoxidharzhärter und einen Katalysator auf Basis eines Übergangsmetallkomplexes enthält. Die zweite Komponente enthält weiterhin einen Beschleuniger, der ausgewählt ist der Gruppe bestehend aus Nonylphenol, Dinonylphenol, Piperazin, Triethanolamin, Wasser, Alkoholen, Säuren und ihren Salzen und Kombinationen davon.

Eine weitere Gruppe von Produkten, die erfindungsgemäß durch den Zusatz von Glaspartikeln verbessert werden können, sind Dichtungsmassen. Hierbei handelt es sich um Zusammensetzungen, die als Bindemittel Silicone, silanhärtende Polymere, modifizierte Silicone (MS-Polymere), Polysulfide, Polyurethane, Kautschuk, Polyacrylate, Dispersionsdichtstoffe, Polyvinylchlorid und/oder andere Plastisole enthalten.

Eine wichtige Gruppe der Dichtungsmassen sind bei Raumtemperatur vulkanisierbare Siliconkautschukzusammensetzungen, die ein Polyorganosiloxan-Grundpolymer mit Silanolendgruppen, einen Vernetzer bestehend aus Alkylacyloxysilanen und/oder -siloxanen und einen teilchenförmigen Füllstoff enthaltend.

Bei Raumtemperatur vulkanisierbare Silikonkautschukzusammensetzungen (RTV-Zusammensetzungen) sind in der Technik wohl bekannt. Sie werden beispielsweise in dem europäischen Patent EP 1 013 715 B1 beschrieben. Die Zusammensetzungen bestehen im Allgemeinen aus einem Polyorganodisiloxanpolymer mit Silanolendgruppen, einem Siliciumdioxid-Füllstoff, einem Organotriacyloxysilan als Vernetzungsmittel und einem Metallsalz einer Carbonsäure als Katalysator. Die Zusammensetzungen härten bei Raumtemperatur durch Einwirkung von Feuchtigkeit, die im Allgemeinen in der Atmosphäre vorhanden ist, zu einem festen elastischen Zustand. Silikon-RTV-Zusammensetzungen sind sehr nütztich für Versieglungs- und Abdichtungsanwendungen, bei denen starkes Haftvermögen an verschiedenen Oberflächen wichtig ist. Solche Verwendungen erfordern es, daß die Zusammensetzungen in Risse oder auf Oberflächen gegeben werden, die eine vertikale Orientierung aufweisen oder über Kopf angeordnet sind. Deshalb ist es wichtig, daß solche Zusammensetzungen Viskositäts- und Hafteigenschaften haben, die es erlauben, sie frei in oder auf Risse und Oberflächen aufzubringen.

Als wesentliches Mittel zur Steuerung der Rheologie wird in vielen Silicon-RTV-Zusammensetzungen Siliciumdioxid verwendet. Siliciumdioxid hat jedoch auch bei diesen Dichtungsmassen einige Nachteile. Einerseits ist dieses Material relativ teuer und andererseits kann es im praktischen Gebrauch nur bis zu einem Anteil von etwa 20 Gew.-% an der Silikonkautschukzusammensetzung eingesetzt werden. Bei Einsatz höherer Mengen steigt die Viskosität der Zusammensetzungen so stark an, daß sie nicht mehr verarbeitbar sind.

Auch bei Siliconkautschukzusammensetzungen führt der vollständige oder partielle Ersatz von feinteiligem Siliciumdioxid durch Glaspartikel, die durch die Zerkleinerung von geschäumtem Glas erhalten worden sind, zu verbesserten technischen Eigenschaften. Das Glaspulver kann bis zu einem Gehalt von ca. 70 Ges.-% verwendet werden. Es ist als überraschend anzusehen, daß das Glaspulver nicht zu einer Zerstörung der Polymermatrix führt, sondern zu einem niedrigmoduligen, hochdehnfähigen, hochelastischen Kautschuk vulkanisiert. Dieser Kautschuk weist selbstverlöschende Eigenschaften auf, d. h. er ist zwar entflammbar, aber die Flammen erlöschen nach kurzer Zeit von selbst. Überraschenderweise wird mit steigendem Füllstoffgehalt die Einreißfestigkeit des Kautschuks deutlich gesteigert.

Eine weitere Dichtungsmasse, deren Eigenschaften erfindungsgemäß durch die Einarbeitung von Glasschaumpulver verbessert werden können, ist in dem Patent DE 38 16 808 C1 beschrieben. Es handelt sich um eine Ein-Komponenten-Form- und Dichtungsmassen auf Basis von Präpolymeren, welche Silyl-Endgruppen mit mindestens einem hydrolisierbaren Substituenten am Si-Atom enthalten, metallorganischen Zinnverbindungen als Katalysator sowie anorganischen Füllstoffen. Die Masse.. enthält ein Isocyanat und/oder ein Carbonsäurechlorid in einer Menge von 0,01-1 Gew.-% als Stabilisator. Der Stabilisator ist vorteilhaft p-Toluylsulfonylisocyanat.

Aus der Patentanmeldung DE 196 53 388 A1 ist ein druckelastischer, schäumbarer Dichtstoff auf Basis silanmodifizierter Polymerer bekannt. In der bekannten Zusammensetzung wird hochdisperse Kieselsäure als Füllstoff eingesetzt. Diese kann zum Teil oder vollständig durch Glasschaumpulver ersetzt werden.

Weiterhin ist aus der Patentanmeldung DE 195 17 452 A1 ein Zwei-Komponenten-Kleb-/Dichtstoff mit hoher Anfangshaftfestigkeit bekannt. Die erste Komponente enthält einen einkomponentigen, feutigkeitshärtenden Kleb-/Dichtstoff und die zweite Komponente enthält einen Vernetzer und/oder Beschleuniger für die erste Komponente.

Geeignete Organopolysiloxanmassen, mit denen die vorliegende Erfindung verwirklicht werden kann, sind auch beschrieben in der Patentschrift EP 0 940 445 B1. Es handelt sich hierbei um RTV-1-Massen, die auf einem α,ω-Dihydroxypolydiorganosiloxan, einem Füllstoff und gegebenenfalls weiteren Bestandteilen basieren. Die in den bekannten Massen verwendete Kieselsäure kann vorteilhaft mindestens teilweise durch Glasschaumpulver ersetzt werden.

Aus dem Patent US 3 677 996 ist eine bei Raumtemperatur härtende Silikonkautschukmasse bekannt, die Siloxanelastomere, ein stickstoffhaltiges Vernetzungsmittel und ein Polyglycol enthält. Auch bei dieser Zusammensetzung verbessert der Zusatz von Glasschaumpulver die technischen Eigenschaften des Produkts.

Aus der Patentschrift DE 699 06 232 T2 ist eine bei Raumtemperatur vulkanisierbare Einkomponenten-Silikonkautschukzusammensetzung bekannt, die folgende Bestandteile enthält:
(A) 100 Gewichtsteile eines Polyorganosiloxan-Grundpolymers mit Silanolendgruppen und einer Viskosität innerhalb eines Bereichs von 200-500.000 mPa·s bei 25 °C, das durchschnittlich 1,85 bis 2 organische Reste pro Siliciumatom enthält und 0,02 Gew.-% bis 2 Gew.-% siliciumgebundene Hydroxylreste enthält,
(B) 0,5-10 Gewichtsteile eines Organotriacyloxysilan-Vernetzungsmittels, beschrieben durch die Formel R²Si(OY)₃, worin R² ein monovalenter Kohlenwasserstoffrest mit 1-18 Kohlenstoffatomen ist und jedes Y ein unabhängig ausgewählter gesättigter Monoacylrest einer Carbonsäure ist, und
(C) 0,2-10 Gewichtsteile eines Polysiloxan-Polyether-Copolymers, beschrieben durch die Formel R³Si((OSiR³₂)ₓOSiR³₂R⁴)₃, worin jedes R³ ein unabhängig ausgewählter monovalenter Kohlenwasserstoffrest mit 1-18 Kohlenstoffatomen ist, x = 0-1000 ist und R⁴ durch die Formel -(CH₂)ₐO(CH₂CH₂O)_{b}(CH₂CHR⁵O)_{c}R⁶ beschrieben ist, worin R⁵ ein Alkylrest mit 1-6 Kohlenstoffatomen ist, R⁶ aus Wasserstoff, monovalenten Kohlenwasserstoffresten mit 1-12 Kohlenstoffatomen und gesättigten Monoacylresten einer Carbonsäure ausgewählt ist, a = 3-12 ist, b = 0-100 ist , c = 0-100 ist und b + c > 0 ist, und
(D) 1-70 Gewichtsteile teilchenförmiges Siliciumdioxid.

Auch bei dieser Zusammensetzung kann das teilchenförmige Siliciumdioxid vollständig oder zum Teil durch Glasschaumpulver ersetzt werden.

Aus der WO 2005/033240 A1 sind Bindemittel mit Barriere-Eigenschaften bekannt, die als Füllstoff ebenfalls vorteilhaft Glasschaumpulver enthalten können. Die Bindemittel enthalten a) eine Verbindung mit mindestens einer NCO-Gruppe und mindestens einer durch Bestrahlung härtbaren reaktiven funktionellen Gruppe als Komponente (A) und b) eine Silicium-organische Verbindung als Komponente (B) mit mindestens einer NCO-Gruppe und mindestens einer funktionellen Gruppe der Formel (I): -Si(X)₃₋ₙ mit X = -NH₂; -NH-CO-R; -OOC-R; -O-N=C(R)₂ oder OR'; R = ein linear oder verzweigter, gesättigter oder ungesättigter C₁-C₁₈ Alkylrest, bevorzugt ein Methyl-, Ethyl-, Propyl- oder iso-Propylrest; R' = R, bevorzugt ein Methyl-, Ethyl-, Propyl- oder iso-Propylerst; oder ein Oxyalkylenrest mit bis zu 4 C-Atomen, bevorzugt -(C₂II₄-O)ₘ-II und/oder (CH₂-CH(CH₃)-O)ₘ-H; ein C₅-C₈-Cycloalkylrest; ein C₆-C₁₀-Aylrest oder ein C₇-C₁₂-Aralkylrest; m = 1 bis 40, bevorzugt 1 bis 20, insbesondere bevorzugt 1 bis 10; n = 0, 1 oder 2. Das Bindemittel wird als strahlenhärtbares Bindemittel in Beschichtungsmitteln, Füll-, Dicht- oder Klebstoffen eingesetzt. Unter Verwendung des Bindemittels könne auch Verbundfolien mit Barriere-Eigenschaften gegenüber CO₂, O₂, N₂, Wasserdampf und Aromastoffen hergestellt werden.

Zusammensetzungen mit Bindemittelbarriere-Eigenschaften können auch enthalten
A) mindestens eine im Bereich von 18°C bis 100 °C, bevorzugt 20°C bis 80°C, fließfähige Verbindung mit mindestens einer durch Bestrahlung härtbaren reaktiven funktionellen Gruppe als Komponente (A);
B) mindestens eine Verbindung mit mindestens einer durch Bestrahlung härtbaren reaktiven funktionellen Gruppe und mindestens einer COOH-Gruppe als Komponente (B);
C) gegebenenfalls einen nanoskaligen Füllstoff als Komponente (C), der bevorzugt ausgewählt ist aus der Gruppe: Oxide, Nitride, Halogenide, Sulfide, Carbide, Telluride, Selenide der zweiten bis vierten Hauptgruppe, der Übergangselemente, der Lanthanide und/oder aus der Gruppe der Polyorganosiloxane und
D) Glaspartikel, die durch Zerkleinern von aufgeschäumtem neutralem oder alkalischem Glas erhalten worden sind.

Das erfindungsgemäße Bindemittel weist Barriere-Eigenschaften gegenüber CO₂, O₂, N₂, Wasserdampf und Aromastoffen auf. Bei der bevorzugten Verwendung als Dicht- oder Klebstoff wird die Anzahl der Produktionsschritte zur Herstellung von Verbundmaterialien mit Barriere-Eigenschaften verringert, da die sonst üblichen zusätzlichen Beschichtungen mit Polyvinylidenchlorid und/oder Ethylenvinylalkohol-Schichten oder das Bedampfen mit Aluminiumschichten nicht mehr erforderlich sind. Durch das Fehlen einer Metallschicht sind die Verbundmaterialien sortenreiner und damit leichter zu entsorgen. Insbesondere wird durch das Fehlen einer Metallschicht die Herstellung transparenter Folienverbunde mit Barriere-Eigenschaften ermöglicht.

Die erfindungsgemäßen Bindemittel weisen bei 60°C eine Viskosität von 50 mPa·s bis 52000 mPa·s (gemessen nach Brookfield, Digital. Viscosimeter RVT DV-II, Spindel 27) auf und sind daher bei niedrigen Temperaturen, d. h. in einem Bereich von 40 °C bis 120 °C, gut applizierbar und weisen schnell eine gute Anfangshaftung auf. Temperaturempfindliche Substrate, beispielsweise Polyolefinfolien, lassen sich somit ohne Schädigung des Substrats sicher verkleben.

Das erfindungsgemäße Bindemittel ist strahlenhärtbar und wird in einer bevorzugten Ausführungsform als dual-cure-System eingesetzt. Die Bindemittel sollen dann wasserfrei sein. Dual-cure-Systeme zeichnen sich dadurch aus, daß sie sowohl strahlenhärtbar als auch durch einen zweiten, unabhängigen Härtungsmechanismus aushärtbar sind. Die erfindungsgemäßen Bindemittel lassen sich bevorzugt als 1-Komponenten (1K)-Systeme einsetzen, so daß die Bereitstellung zusätzlicher Komponenten, insbesondere von Härtern, entfallen kann.

Die Kleb-, Dicht- und Füllstoffe, die das erfindungsgemäße Bindemittel enthalten, weisen wenig bis keine migrationsfähigen Bestandteile auf. Somit entfallen die sonst üblichen Wartezeiten bis zur vollständigen Aushärtung nach Applizierung des Kleb-, Dicht- oder Füllstoffes.

Unter Bindemittel sollen im Rahmen der vorliegenden Erfindung solche Stoffe verstanden werden, die gleiche oder verschiedenartige Substrate verbinden oder selbst darauf fest haften können.

Die Begriffe "Härtung", "Aushärtung" oder ähnliche Begriffe beziehen sich im Rahmen des vorliegenden Textes auf Polyreaktionen, wie sie innerhalb einzelner Komponenten der jeweils in Zusammenhang mit dem Begriff betrachteten Zusammensetzung ablaufen können. Bei der Polyreaktion kann es sich um eine radikalische, anionische oder kationische Polymerisation, Polykondensation oder Polyaddition handeln., bei der eine reaktive funktionelle Gruppe mit: einer geeigneten weiteren funktionellen Gruppe unter Erhöhung des Molekulargewichts des sie tragenden Moleküls reagieren kann. Üblicherweise finden gleichzeitig auch noch Vernetzungsreaktionen statt.

Unter dem Merkmal "strahlenhärtbar" wird im Rahmen der vorliegenden Erfindung das Auslösen einer Polyreaktion unter Einfluß von Strahlung verstanden. Unter Strahlung soll hierbei jede Art von Strahlung verstanden werden, die in der zu bestrahlenden vernetzbaren Bindemittel-Schicht eine irreversible Vernetzung hervorruft. Geeignet sind besonders UV-, Elektronen-Strahlen, sichtbares Licht, aber auch IR-Strahlung.

Eine durch Bestrahlung härtbare reaktive funktionelle Gruppe ist beispielsweise eine Gruppe mit einer Kohlenstoff-Kohlenstoff-Doppelbindung.

Auf polymere Verbindungen bezogene Molekulargewichtsangaben beziehen sich, soweit nicht anders angegeben ist, auf das Zahlenmittel des Molekulargewichts (Mₙ). Alle Molekulargewichtsangaben beziehen sich, soweit nicht anders angegeben ist, auf Werte, wie sie durch Gelpermeationschromatographie (GPC) erhältlich sind.

Als Komponente (A) werden monomere, oligomere und polymere Verbindungen eingesetzt, sofern sie mindestens eine durch Bestrahlung härtbare reaktive funktionelle Gruppe aufweisen. Bevorzugt ist Komponente (A) im Bereich von 18°C bis 100 °C, bevorzugt 20°C bis 80 °C, fließfähig.

Derartige Verbindungen, die als Komponente (A) einsetzbar sind, werden ausgewählt aus der Gruppe: Polyacryl- und/oder Polymethacrylsäure-Alkyl-, Cycloalkyl- oder Arylester, Methacrylsäure- und/oder Acrylsäure-Homo- und/oder Copolymerisate, ungesättigte Polyester, Polyether, Polycarbonate, Polyacetale, Polyurethane, Polyolefine, Vinylpolymere oder Kautschukpolymere wie Nitril- oder Styrol/Butadien-Kautschuk.

Für die Erfindung als Komponente (A) einsetzbare Verbindungen sind beispielsweise bei C.G. Roffey in "Photogeneration of Reactive Species for UV Curing", Verlag John Wiley & Sons, 1997 auf den Seiten 182 (Vinyl-Derivate), 482-485- (ungesättigte Polyester), 487-502 (Polyester-, Polyether-, Epoxy-, Polyurethan- und Melamin-Acrylate), 504-508 (strahlenvernetzbare Organopolysiloxan-Polymere) sowie bei R. Holmann und P. Oldring in "U.V. and E.B. Curing Formulation for Printing Inks, Coatings and Paints", Verlag SIFA (Selective Industrial Training Associates Limited, London, U.K.), 2. Auflage, 1988, auf den Seiten 23-26 (Epoxy-Acrylate), 27-35 (Urethan-Acrylate), 36-39 (Polyester-Acrylate), 39-41 (Polyether-Acrylate), 41 (VinylPolymere), 42-43 (ungesättigte Polyester) beschrieben.

Vorzugsweise werden als Komponente (A) Verbindungen aus der Gruppe: (Meth)acrylsäure- Homo- und/oder Copolymerisate, Polyester(meth)acrylate, Epoxy(meth)acrylate oder Polyurethan(meth)acrylate-eingesetzt.

Das Merkmal "(Meth)acrylat" soll hierbei eine verkürzte Schreibweise für "Acrylat und/oder Methacrylat" bedeuten.

Comonomere der (Meth)Acrylsäure, die als Comonomeres Styrol, Methylstyrol und/oder andere Alkylstyrole und/oder alpha-Olefine enthalten, sind bevorzugt.

Als Komponente (A) sind besonders di- und/oder höherfunktionelle Acrylat- oder Methacrylatester geeignet. Solche Acrylat- oder Methacrylatester umfassen bevorzugt Ester der Acrylsäure oder Methacrylsäure mit aromatischen, aliphatischen oder cycloaliphatischen Polyolen oder Acrylatester von Polyetheralkoholen. Geeignete Verbindungen sind bei C.G. Roffey "Photogeneration of Reactive Species for UV Curing" auf den Seiten 537-560 sowie bei R. Holman und P. Oldring "U.V and E.B. Curing Formulation for Printing Inks, Coatings and Paints" auf den Seiten 52-59 beschrieben.

Verbindungen, die besonders bevorzugt, als Komponente (A) eingesetzt werden, umfassen (Meth)Acrylatester aliphatischer Polyole mit 2 bis etwa 40 Kohlenstoffatomen.

Derartige Verbindungen werden bevorzugt ausgewählt aus der Gruppe: Neopentylglykoldi(meth)acrylat, 1,6-Hexandioldi(meth)acrylat, Trimethylolpropantri(meth)acrylat, Pentaerythrittetra(meth)acrylat, sowie (Meth)acrylatester des Sorbits und anderer Zuckeralkohole. Die (Meth)acrylatester von aliphatischen oder cycloaliphatischen Diolen können mit einem aliphatischen Ester oder einem Alkylenoxid modifiziert werden. Die durch einen aliphatischen Ester modifizierten Acrylate umfassen beispielsweise Neopentylglykolhydroxypivalatdi(meth)acrylat, Caprolacton-modifizierte Neopentylglykolhydroxypivalatdi(meth)acrylate- und dergleichen. Die Alkylenoxid-modifizierten Acrylatverbindungen umfassen beispielsweise Ethylenoxid-modifizierte Neopentylglykoldi(meth)acrylate, Propylenoxid-modifizierte Neopentylglykoldi(meth)acrylate, . Ethylenoxid-modifizierte 1,6-Hexandioldi-(meth)acrylate oder Propylenoxid-modifizierte 1,6-Hexandioldi(meth)acrylate oder Gemische aus zwei oder mehr davon.

Einsetzbar sind auch Acrylate oder Methacrylate, die aromatische Gruppen enthalten. Hierzu gehören entsprechende Bisphenol-A-Verbindungen, beispielsweise Diacrylate oder Dimethacrylate von Addukten von Bisphenol A mit Alkylenoxiden, z.B. Addukte von Bisphenol A mit Ethylenoxid und/oder Propylenoxid.

Auf Polyetherpolyolen aufgebaute Acrylatmonomere umfassen beispielsweise Neopentylglykol-modifizierte (Meth)acrylate, Trimethylolpropandi(meth)acrylate, Polyethylenglykoldi(meth)acrylate, Polypropylenglykoldi(meth)acrylate und dergleichen. Tri- und höherfunktionelle Acrylatmonomere umfassen beispielsweise Trimethylolpropantri(meth)acrylat, Pentaerythritoltri- und tetra(meth)acrylat, Dipentaerythritoltetra(meth)acrylat, Dipentaerytrhitolpenta(meth)acrylat, Dipentaerythritolhexa(meth)acrylat, Caprolacton-modifiziertes Dipentaerythritolhexa-(meth)acrylat, Pentaerythritoltetra(meth)acrylat, Tris[(meth)acryloxyethyl]isocyanurat, Caprolacton-modifizierte Tris[(meth)acryloxyethyl]isocyanurate oder Trimethylolpropantetra(meth)acrylat oder Gemische aus zwei oder mehr davon.

Unter den genannten Di-, Tri- oder höherfunktionellen Acrylatmonomeren, die erfindungsgemäß als Komponente (A) einsetzbar sind, sind Di-, Tri- und Tetrapropylenglykoldiacrylat, Neopentylglykolpropoxylatdi(meth)acrylat, Trimethylolpropantri(meth)acrylat, Trimethylolpropanmonethoxytri(meth)acrylat und Pentaerythritoltriacrylat bevorzugt.

(Meth)Acrylatester auf Basis urethangruppenhaltiger Polyole lassen sich herstellen, indem ein Polyol mit einem Di- oder höherfunktionellen Isocyanat umgesetzt wird, so daß OH-terminierte Polyurethan-Präpolymere entstehen, die mit (Meth)Acrylsäure zu den entsprechenden Diestern verestert werden.

In einer besonders bevorzugten Ausführungsform werden als Komponente (A) Verbindungen mit der allgemeinen Formel (I) eingesetzt:

H₂C=CR¹-C(=O)-O-(R⁷-O)ₙR⁸ (I)

mit :
R¹ = H, CH₃;
R⁷ = geradkettig oder verzweigte Alkylengruppe von C₂ bis C₁₀;
R⁸ = geradkettig oder verzweigte Alkylengruppe von C₁ bis C₂₅;
n = 1 bis 25.

Bevorzugte Verbindungen der allgemeinen Formel (I) sind Methoxyethylacrylat, Ethoxymethylmethacrylat, Methoxyethoxyethylmethacrylat, Ethoxyethoxyethylacrylat, Butyldiethylenglykolmethacrylat, -ethoxyliertes Nonylphenolacrylat, ethoxyliertes Laurylalkoholmethacrylat, alkoxyliertes Tetrahydrofurfurylacrylat, Methoxypolyethylenglykolmanoacrylat. Besonders bevorzugt wird Komponente (A) ausgewählt aus der Gruppe: hydrofunktionelles Ethylhexylmethacrylat, Octyl-/Decylacrylat, ethoxyliertes Trimethylolpropan-Triacrylat, modifizierte aromatische oder aliphatische Epoxyacrylate, Neopentylglykoldi(meth)acrylat, 1,6-Hexandioldi(meth)acrylat, Trimethylolpropantri(meth)acrylat, Pentaerythrittetra(meth)acrylat, Neopentylglykolhydroxypivalatdi(meth)acrylat, Caprolacton-modifizierte Neopentylglykolhydroxypivalatdi(meth)acrylate, Ethylenoxid-modifizierte Neopentylglykoldi(meth)acrylate, Propylenoxid-modifizierte Neopentylglykoldi(meth)acrylate, Ethylenoxid-modifizierte 1,6-Hexandioldi(meth)acrylate, Propylenoxid-modifizierte 1,6-Hexandioldi(meth)-acrylate, Polyethylenglykoldi(meth)acrylate, Polypropylenglykoldi(meth)acrylate, Pentaerythritoltri(meth)acrylat, Dipentaerythritoltetra(meth)acrylat, Dipentaerytrhitolpenta(meth)acrylat, Dipentaerythritolhexa(meth)acrylat, Caprolacton-modfiziertes Dipentaerythritolhexa(meth)acrylat, Tris[(meth)acryloxyethyl]isocyanurat, Caprolacton-modifizierte Tris[(meth)acryloxyethyl]isocyanurate, Di-, Tri- und Tetrapropylenglykoldiacrylat, Neopentylglykolpropoxylatdi(meth)acrylat, Trimethylolpropanmonethoxytri(meth)acrylat, aminmodifizierte Polyetheracrylate.

Die molare Masse der Verbindung (A) liegt im Bereich von 100 bis 15000 g/mol, bevorzugt von 100 bis 10000 g/mol und besonders bevorzugt von 100 bis 8000 g/mol. Die Verbindung (A) stellt im erfindungsgemäßen strahlenhärtbaren Bindemittel mit Barriere-Eigenschaften einen Anteil von 5 bis 60 Gew.-%, bevorzugt 5 bis 45 Gew.-%, insbesondere bevorzugt 5 bis 30 Gew.-%.

Als Komponente (B) werden bevorzugt acrylierte Carbonsäure-terminierte-Polyester, Carbonsäure-modifizierte Polybutadiene und auf Polyetherpolyolen aufgebaute, säuremodifizierte (Meth)acrylate eingesetzt. Letztgenannte sind erhältlich durch Umsetzung von Polyetherpolyen, wie Ethylenglykol oder Propylenglykol, mit aromatischen oder aliphatischen Dicarbonsäuren, wie Adipinsäure oder Phthalsäure, und (Meth)acrylsäure.

Insbesondere werden als Komponente (B) Produkte eingesetzt, die in der WO 01/16244 A1 offenbart sind und deren gesamter Inhalt ausdrücklich in der vorliegenden Patentanmeldung einbezogen ist.

Bevorzugte kommerziell verfügbare Verbindungen, die als Komponente (B) eingesetzt werden, sind bei der Firma Cognis unter dem Handelsnamen PHOTOMER® 5429 F, 5432, 4173, 4149, 3038 oder 4017, bei der Firma BASF unter dem Handelsnamen Laromer PE 44F, PE 55F, PE 56F, 8800, 8981, 9004, bei der Firma Cray Valley unter dem Handelsnamen Craynor 203, 293, 294 E, UVP 210, UVP 220 oder dem Handelsnamen Synocure AC 1007, bei der Firma Rahn unter dem Handelsnamen Genomer 6043, 6050, bei der Firma UCB unter dem Handelsnamen Ebecryl 436, 438, 584, 586, 588 erhältlich.

Die molare Masse der Verbindung (B) liegt im Bereich von 100 bis 15000 g/mol, bevorzugt von 100 bis 10000 g/mol und besonders bevorzugt von 100 bis 8000 g/mol.

Die Verbindung (B) stellt im erfindungsgemäßen strahlenhärtbaren Bindemittel mit Barriere-Eigenschaften einen Anteil von 5 bis 70 Gew.-%, bevorzugt 10 bis 60 Gew-%, insbesondere bevorzugt 20 bis 40 Gew.-%.

Als Komponente (C) kann das Bindemittel einen nanoskaligen Füllstoff enthalten, der bevorzugt ausgewählt ist aus der Gruppe: Oxide, Nitride, Halogenide, Sulfide, Carbide, Telluride, Selenide der zweiten bis vierten Hauptgruppe, der Übergangselemente, der Lanthanide und/oder aus der Gruppe der Polyorganosiloxane.

Nanoskalige Füllstoffe werden auch als nanodisperse Füllstoffe oder "Nano-Partikel" bezeichnet, da dessen kleinste, in der Dispersion eine starre Einheit bildenden Partikel im zahlengewichteten Mittel aller Partikel in wenigstens einer, für jedes Partikel beliebig wählbaren Richtung eine Ausdehnung von nicht mehr als 1000 Nanometer (nm), bevorzugt nicht mehr als 500 nm und insbesondere bevorzugt nicht mehr als 100 nm aufweisen.

Die Nanopartikel besitzen beispielsweise eine kugelartige, stäbchenartige, plättchenartige Struktur oder stellen Gemische aus verschiedenen Strukturen dar. Die im nanoskaligen Füllstoff enthaltenen Nanopartikel weisen bevorzugt im zahlengewichteten Mittel Größen im Bereich von 1 bis 40 nm, besonders bevorzugt zwischen 3 und 30 nm auf. Die Partikelgröße wird dabei bevorzugt nach der UPA-Methode (Ultrafine Particle Analyzer) bestimmt, zum Beispiel nach dem Laser-Streulicht-Verfahren ("Laser Light Back Scattering"). Um eine Agglomeration oder ein Zusammenwachsen der Nanopartikel zu verhindern oder zu vermeiden, können diese üblicherweise oberflächenmodifiziert bzw. oberflächenbeschichtet sein. Ein derartiges Verfahren zur Herstellung agglomeratfreier Nanopartikel ist am Beispiel von Eisenoxidteilchen in der DE-A-19614136 in den Spalten 8 bis 10 angegeben. Einige Möglichkeiten zur oberflächlichen Beschichtung derartiger Nanopartikel zur Vermeidung einer Agglomeration sind in der DE-A-19726282 angegeben. In einer bevorzugten Ausführungsform der Erfindung werden nanoskalige Füllstoffe eingesetzt, deren kleinste in der Dispersion eine starre Einheit bildenden Bestandteile in zwei senkrecht zueinander stehenden, beliebig wählbaren Richtungen jeweils eine Ausdehnung von wenigstens dem. Zehnfachen der Größe der Bestandteile in der Richtung mit der geringsten Ausdehnung des Bestandteils aufweisen. Die Dicke dieser Partikel ist bevorzugt kleiner als 10 nm.

Der nanoskalige Füllstoff wird ausgewählt aus der Gruppe:
Oxide, Nitride, Halogenide, Sulfide, Carbide, Telluride, Selenide der zweiten bis vierten Hauptgruppe, der Übergangselemente oder der Lanthanide, insbesondere Oxide, Hydroxide, Nitride, Halogenide, Carbide oder gemischte Oxid-/Hydroxid-/Halogenit-Verbindungen des Aluminums, Siliciums, Zirkoniums, Titans, Zinns, Zinks, Eisens oder der (Erd)Alkalymetalle. Hierbei handelt es sich im wesentlichen um Tonerden, zum Beispiel Aluminiumoxide, Boehmit, Bayerit, Gibbsit, Diaspor und ähnliche. Geeignet sind Schichtsilikate wie beispielsweise Bentonit, Montmorillonit, Hydrotalcit, Hectorit, Kaolinit, Boehmit, Glimmer, Vermiculit oder deren Mischungen. Besonders bevorzugt werden Phyllosilikate, wie Magnesiumsilikat oder Alluminiumsilikat, sowie Montmorillonit, Saponit, Beidellit, Nontronit, Hectorit, Stevensit, Vermiculit, Halloysit oder deren synthetische Analoga eingesetzt. Von den Modifikationen Cristobalit, Quarz und Tridynit des Siliciumdioxids wird die Quarz-Modifikation bevorzugt.

Desweiteren sind Magnesiumoxid, Aluminiumoxid, Magnesiumfluorid, Cadmiumsulfid, Zinksulfid, Cadmiumselenid u. ä. als nanoskale Füllkörper geeignet. In einer besonders bevorzugten Ausführungsform der Erfindung ist Komponente (C) amorphes Siliciumdioxid.

Als Verfahren zur Messung der Nanopartikel, insbesondere der amorphen Siliciumdioxidpartikel, kommt die Neutronenkleinwinkeistreuung (SANS small angle neutron scattering) zur Anwendung. Dieses Meßverfahren ist dem Fachmann geläufig und bedarf hier keiner näheren Erläuterung. Bei der SANS-Messung enthält man eine Partikelgrößeverteilungskurve, bei der der Volumenanteil von Partikeln mit entsprechender Größe (Durchmesser) aufgetragen ist über dem Partikeldurchmesser. Als mittlere. Partikelgröße im Sinne der Erfindung wird definiert der Peak einer solchen SANS-Verteilungskurve, also die größte Volumenfraktion mit Partikeln entsprechenden Durchmessers. Die mittlere Partikelgröße liegt bevorzugt zwischen 6 und 40 nm, weiter vorzugsweise zwischen 8 und 30 nm, besonders bevorzugt zwischen 10 und 25 nm. Die Siliciumdioxidpartikel sind vorzugsweise im wesentlichen kugelförmig.

Der Anteil des als Komponente (C) eingesetzten nanoskaligen Füllstoffes im erfindungsgemäßen Bindemittel beträgt 5 Gew.-% bis 50 Gew.-%, vorzugsweise 20 bis 45 Gew.-% und besonders bevorzugt 30 bis 40 Gew.-%.

In einer besonders bevorzugten Ausführungsform ist der nanoskalige Füllstoff in einer fließfähigen Phase dispergiert, wobei die fließfähige Phase polymerisierbare Monomere, Oligomere und/oder Polymere enthält. Die fließfähige Phase kann aus einer Mischung der Komponenten (A), (B) und (D) bestehen, bevorzugt wird die fließfähige Phase aus Komponente (A) gebildet. Besonders bevorzugt ist die als Dispergiermittel eingesetzte fließfähige Phase wasserfrei, sie enthält also nur noch geringe Spuren Wasser.

Verfahren zur Herstellung derartiger Dispersionen sowie Siliciumdioxid-Dispersionen selbst sind in der EP-A1-1236765 offenbart, deren gesamter Inhalt in die vorliegende Patentanmeldung einbezogen wird.

Kommerziell verfügbare Dispersionen aus den Komponenten (A) und (C) sind von der Firma Hanse Chemie unter dem Handelsnamen Nanocryl® erhältlich. Einsetzbare Produkte sind bevorzugt Nanocryl® XP21/0746, XP21/0768, XP 21/0396, XP 21/1045 oder XP 2111515.

Der als Komponente (C) beschriebene nanoskalige. Füllstoff wird bei der vorliegenden Erfindung mindestens teilweise durch Glasschaumpulver ersetzt.

In einer weiteren bevorzugten Ausführungsform enthält das Bindemittel mindestens eine Silicium-organische Verbindung als Komponente (D).

Aus der Gruppe der als Komponente (D) einsetzbaren Silicium-organischen Verbindungen wird als Komponente (D1) mindestens ein dreidimensional vernetzbares Polyorganosiloxan, welches nach der Vernetzung einen mittleren Partikeldurchmesser im Bereich von 70 nm bis 1000 nm aufweist, eingesetzt. Derartige Polyorganosiloxane sind der EP-B1-0407834 auf der Seite 3, Zeile 43 bis Seite 4, Zeile 19, beschrieben.

In einer bevorzugten Ausführungsform ist Komponente (D) als Komponente (D2) ein Reaktionsprodukt, bevorzugt ein Ver- oder Umesterungsprodukt, aus Acrylsäure und/oder Methacrylsäure oder deren Derivaten mit einem Silan (e), welches durch die allgemeine Formel (II) charakterisiert ist:

Y-A-Si((Z)ₙ)(T)₃₋ₙ (II)

mit
- Y =: Epoxid, -OH, -COOH, -SH, -NH₂, NHR"- Gruppe;
- R" =: linearer oder verzweigter, gesättigter oder ungesättigter C₁-C₁₈-Alkyl-; C₅-C₈- Cycloalkyl-, C₆-C₁₀-Aryl-, C₇-C₁₂-Aralkylrest; Oxyalkyenrest mit bis zu 4 C- Atomen, bevorzugt -(CH₂-CH₂-O)ₘ-H und/oder (CH₂-CH(CH₃)-O)ₘ-H; A- Si((Z)ₙ)(X)₃₋ₙ; ein mit Alkyl-, Cycloalkyl- oder Arylgruppen substituierter Siloxanrest mit etwa 1 bis etwa 20 Si-Atomen;
- A =: eine lineare oder verzweigte, gesättigte oder ungesättigte Alkylengruppe mit 1 bis 12 C-Atomen, bevorzugt eine lineare oder verzweigte Alkylengruppe mit 1 bis 4 C-Atomen;
- Z =: C₁-C₁₈-Alkylgruppe, bevorzugt C₁-C₄-Alkylgruppe;
- T =: -NH₂; -NH-CO-R⁵, -OOC-R⁵; -O-N=C(R⁵)₂ oder OR⁶;
- R⁵ =: ein linearer oder verzweigter, gesättigter oder ungesättigter C₁-C₁₈-Alkylrest, bevorzugt ein Methyl-, Ethyl- Propyl- oder iso-Propylrest;
- R⁶ =: R⁵, bevorzugt ein Methyl-, Ethyl- Propyl- oder iso-Propylrest; oder ein Oxyalkyenrest mit bis zu 4 C-Atomen, bevorzugt -(CH₂-CH₂-O)ₘ-H und/oder (CH₂-CH(CH₃)-O)ₘ-H; ein C₅-C₈-Cycloalkyrest; ein C₆-C₁₀-Arylrest oder ein C₇- C₁₂-Aralkylrest;
- m =: 1 bis 40, bevorzugt 1 bis 20, insbesondere bevorzugt 1 bis 10;
- n =: 0, 1 oder 2.

Beispiele für Verbindungen der Formel (II) sind H₂N-CH₂-Si(O-CH₂-CH₃)₃, HO-CH₂-Si(OCH₃)₃, HO-(CH₂)₃-O-CH₂-Si(O-CH₃)₃, HO-CH₂-CH₂-O- CH₂-Si(OCH₃)₃, (HO-C₂H₄)₂N-CH₂-Si(O-CH₃)_{3,} HO-(C₂H₄-O)₃-C₂H₄-N(CH₃)-CH₂-Si(O-CH₃)₃, H₂N-CH₂-C₆H₄-CH₂-NH-CH₂-Si(O-CH₃)₃, HS-CH₂-Si(O-CH₃)₃, H₂N-(CH₂)₃-NH-CH₂-Si(OCH₃)₃, H₂N-CH₂-CH₂-NH-CH₂-Si(O-CH₃)₃, HN-((CH₂)₃-Si(O-CH₂-CH₃)₃)₂, oder CH₃-(CH₂)₃-NH-(CH₂)₃-Si(O-CH₃)₃, H₂N-(CH₂)₃-Si(O-C₂H₅)₃, H₂N-CH(CH₃)-CH₂-Si(O-CH₃)₃, H₂N-(CH₂)₃-Si(O-CH₃)₃, H₂N-CH₂-CH₂-O-CH₂-CH₂-Si(O-CH₃)₃, (HO-C₂H₄)₂N-(CH₂)₃-Si(O-CH₃)₃, HO-(C₂H₄-O)₃-C₂H₄-N(CH₃)-(CH₂)₃-Si(O-C₄H₉)₃, H₂N-CH₂-C₆H₄-CH₂-CH₂-Si(O-CH₃)₃, H₂N-(CH₂)₃-NH-(CH₂)₃-Si(O-CH₃)₃, H₂N-CH₂-CH₂-NH-(CH₂)₂-Si(OCH₃)₃, H₂N-(CH₂)₂-NH-(CH₂)₃-Si(O-CH₃)₃, H₂N-CH(C₂H₅)-CH₂-Si(O-CH₃)₃, H₂N-CH₂-CH₂-O-CH₂-CH₂-Si(O-C₂H₅)₃, (HO-C₂H₄)₂N- (CH₂)₃-Si(O-C₂H₅)₃, H₂N-CH₂-C₂H₄CH₂-CH₂-Si(O-C₂H₅)₃, H₂N-(CH₂)₃-NH-(CH₂)₃-Si(O-C₂H₅)₃, H₂N-CH₂-CH₂-NH-(CH₂)₂-Si(O-C₂H₅)₃, H₂N-(CH₂)₂-NH-(CH₂)₃-Si(O-C₂H₅)₃, sowie Gemische aus zwei oder mehr davon.

Im Rahmen der vorliegenden Erfindung wird als Silan der allgemeinen Formel (II) bevorzugt 3-Aminopropyftrimethoxysilan, 3-Aminopropyldimethoxymethylsilan, 3-Aminopropyltriethoxysilan, 3-Aminopropyldimethoxyphenylsilan und 3-Aminopropyldiethoxyethylsilan, insbesondere 3-Aminopropyltrimethoxysilan oder Bis(3-triethoxysilylpropyl)amin, oder Gemische daraus, eingesetzt.

Kommerziell erhältliche Silane (e) werden von der Fa. Dynamit Nobel unter der Bezeichnung DYNASYLAN^{®} angeboten. Es sind dies Alkoxysilanderivate mit zwei oder drei Alkoxyresten und ein bzw. zwei Alkylresten, an die auch zusätzlich funktionelle Gruppen gebunden sein können, beispielsweise Amino-, Mercapto-, Methacryloxy- oder eine Nitrilgruppe oder ein Halogenrest wie Chlor.

Insbesondere bevorzugt wird als Komponente (D2) 3-Methacryloxypropyltrimethoxysilan und/oder Allyltriethoxysilan eingesetzt. Komponente (D2) kann alleine oder in Mischung mit Komponente (D1) eingesetzt werden.

In einer weiteren bevorzugten Ausführungsform ist Komponente (D) als Komponente (D3) ein urethangruppenhaltiges Silan mit einem Isocyanatgehalt < 1 Gew.-% NCO, bevorzugt < 0,5 Gew.-% NCO und insbesondere bevorzugt 0,1 Gew.-% NCO. Komponente (D3) kann dabei alleine oder in Mischung mit Komponente- (D1) und/ oder Komponente (D2) eingesetzt werden.

Derartige urethangruppenhaltige Silane sind durch Umsetzung von Polyisocyanaten (c) mit Silanen (e) der allgemeinen Formel (II) erhältlich.

Komponente (D1), (D2) und/oder (D3) sind zu 0,3 Gew.-% bis 20 Gew.-%, bevorzugt 0,4 Gew.-% bis 15 Gew.-% und insbesondere bevorzugt zu 0,5 Gew.-% enhalten.

Aus der Gruppe der als Komponente (D) einsetzbaren Silicium-organischen Verbindungen werden in einer besonders bevorzugten Ausführungsform urethangruppenhaltige Silane mit mindestens einer durch Bestrahlung härtbare reaktive Gruppe als Komponente (D4) eingesetzt.

Komponente (D4) wird hergestellt, in dem man mindestens ein Polyisocyanat (c) mit mindestens einer Verbindung (d), welche sowohl mindestens eine mit NCO-Gruppen reaktive funktionelle Gruppe als auch mindestens eine durch Bestrahlung härtbare reaktive funktionelle Gruppe enthält und mit mindestens einem Silan (e) der Formel (II) umsetzt. Derartige Verfahren sind dem Fachmann bekannt.

Im Sinne der Erfindung werden aus der Gruppe der Polyisocyanate (c) bevorzugt unsymmetrische Diisoyanate und/oder Polyurethan-Präpolymere mit freien NCO-Gruppen ausgewählt.

Unsymmetrische Diisocyanate weisen Isocyanatgruppen im Molekül auf, die sich in ihre Reaktivität unterscheiden. Bevorzugte unsymmetrische Diisocyanate sind 2,4-Diphenylmethandiisocyanat (MDI), die Isomeren des Toluylendiisocyanats (TDI), 1-Isocyanatomethyl-3-isocyanato-1,5,5-trimethylcyclohexan (IPDI).

Hinweise zu dem breiten Spektrum an geeigneten Polyol- und Isocyanatkomponenten sowie Verfahren zur Herstellung von Polyurethan-Präpolymeren kann der Fachmann der Literatur zu Polyurethan-Präpolymeren entnehmen, beispielsweise der FP 150 444, EP 0 590 398 oder WO 99/24486.

Bevorzugt wird als Polyisocyanat (c) ein monomerenarmes Polyurethan-Präpolymer eingesetzt, wobei im Rahmen der vorliegenden Erfindung unter "monomerenarm" eine niedrige Konzentration der monomeren, insbesondere aromatischen, Diisocyanate im PU-Präpolymeren mit freien NCO-Gruppen zu verstehen ist. Die Konzentration dieser sogenannten "Restmonomere" liegt unter einem, vorzugsweise zwischen 0 und 0,5 Gew.-%, besonders bevorzugt zwischen 0 und 0,2 Gew.-%, bezogen auf die Zusammensetzung des PU-Präpolymeren mit freien NCO-Gruppen. Monomerarme PU-Präpolymere mit freien NCO-Gruppen sind beispielsweise aus der DE 4136490, der WO 01/40342 sowie der WO-97/46603 bekannt und ausdrücklich Gegenstand dieser Erfindung.

Die mit einer NCO-Gruppe reaktive funktionelle Gruppe ist eine Gruppe, die ein nach dem Zerewittinoff-Test bestimmbares, an ein N-,O- oder S-Atom gebundenes, aktives Wasserstoffatom aufweist. Hierunter fallen insbesondere die Wasserstoffatome von Wasser, Carboxy-, Amino-, Imino-, Hydroxy-, und Thiolgruppen.

Bevorzugt wird als Verbindung (d), welche sowohl mindestens eine mit NCO-Gruppen reaktive funktionelle Gruppe als auch mindestens eine durch Bestrahlung härtbare reaktive funktionelle Gruppe enthält, ein (Meth)acrylat der allgemeinen Formel (III) eingesetzt:

H₂C=CR¹ -C(=O)-O-R² -Y (III)

mit :
- Y =: eine gegenüber NCO-Gruppen reaktive Gruppe, bevorzugt OH, COOH, SH, NH₂, NHR³;
- R¹ =: H, CH₃;
- R²: = gesättigte oder ungesättigte lineare oder verzweigte Alkylengruppe mit 2 bis 21 Kohlenstoffatomen, ggf. mit funktionellen Gruppen, beispielsweise mit einer Phenoxy- oder Acetoxygruppe, substituiert; bevorzugt 2 bis 6 Kohlenstoffatomen, insbesondere eine Ethylen-, Propylen-, Isopropylen-, n- Butylen-, Isobutylen-Gruppe, oder eine C₂-C₄-Alkylenoxid-Gruppe, bevorzugt eine Ethylenoxid- und/oder Propylenoxidgruppe, insbesondere bevorzugt eine Ethylenoxidgruppe mit 2 bis 10 Ethylenoxideinheiten und/oder eine Propylenoxidgruppe mit 1 bis 7 Propylenoxideinheiten;
- R³ =: linearer oder verzweigter, gesättigter oder ungesättigter C₁-C₁₈-Alkylrest; C₅-C₈- Cycloalkyl, C₆-C₁₀-Aryl, C₇-C₁₂-Aralkyl.

Die Herstellung derartiger (Meth)acrylate der allgemeinen Formel (III) ist dem Fachmann bekannt.

Bevorzugt werden als (Meth)acrylate der allgemeinen Formel (III) Hydroxy(meth)acrylate (Y=OH) eingesetzt, beispielsweise: 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 6-Hydroxyhexylacrylat, 6-Hydroxyhexylmethacrylat, Polyethytenglykolacrylat, Polyethylenglykolmethacrylat, Polypropylenglykolacrylat und Polypropylenglykolmethacrylat, Glycerinmono(meth)-acrylat, 1,3-Glycerindi(meth)acrylat, 3-Phenoxy-2-hydroxypropyl-(meth)acrylat, 3-Toluyloxy-2-hydroxypropyl(meth)acrylat, 3-Acetoxy-2-hydroxypropyl(meth)acrylat, 2-Hydroxy-3-[(2-methyl-1-oxo-2-propenyl)oxy]propylester der 4-Hydroxy-Benzoesäure, 2-Hydroxybutyl-(meth)acrylat, 3-Hydroxybutyl(meth)acrylat, 4-Hydroxybutyl(meth)-acrylat, 6-Hydroxyhexyl(meth)acrylat.

Die Hydroxy-Acrylate oder -Methacrylate werden dabei einzeln oder im Gemisch eingesetzt.

Die Mengen an Polyisocyanat (c) und (Meth)acrylat der allgemeinen Formel (III) können in einem breiten Bereich .ausgewählt werden. So kann das Verhältnis NCO-Gruppe des Polyisocyanats (c) zur gegenüber NCO-Gruppen reaktiven Gruppe Y des (Meth)acrylats der allgemeinen Formel (III) zwischen 0,6:1 bis 20:1 liegen. Bevorzugt beträgt das Verhältnis NCO:Y 1,2:1 bis 10:1.

Die molare Masse des Umsetzungsproduktes von Polyisocyanat (c) mit Verbindung (d), welche sowohl mindestens eine mit NCO-Gruppen reaktive funktionelle Gruppe als auch mindestens eine durch Bestrahlung härtbare reaktive funktionelle Gruppe enthält, liegt zwischen 100 g/mol und 10000 g/mol, bevorzugt zwischen 110 g/mol und 6000 g/mol und insbesondere bevorzugt zwischen 120 g/mol und 4000 g/mol. Der NCO-Wert des Umsetzungsproduktes von Polyisocyanat (c) mit Verbindung (d), welche sowohl mindestens eine mit NCO-Gruppen reaktive funktionelle Gruppe als auch mindestens eine durch Bestrahlung härtbare reaktive funktionelle Gruppe enthält, liegt zwischen 2 Gew.-% und 30 Gew.-%, bevorzugt zwischen 5 Gew.-% und 25 Gew.-% (bestimmt nach Spiegelberger).

Zur Herstellung von Komponente (D4) können sowohl Mischungen von Polyisocyanaten (c) und/oder Mischungen des Silans (e) eingesetzt werden.

Die Reaktion der Polyisocyanatkomponente (c) mit dem Silan (e) erfolgt in einem molaren NCO/Y-Verhältnis von 1:0,01 bis 1, bevorzugt von 1: 0,05 bis 0,7 und insbesondere bevorzugt von 1: 0,1 bis 0,4.

Das Reaktionsprodukt aus der Polyisocyanatkomponente (c) und dem Silan (e) weist einen NCO-Wert von 1-30 %, bevorzugt 10-28 %, insbesondere bevorzugt 15-25 % auf, bestimmt nach Spiegelberger und besitzt eine molare Masse von 100 g/mol bis 1000 g/mol. Verfahren zur Herstellung derartiger Reaktionsprodukte und die Reaktionsprodukte selbst sind in der DE-A1-10162642 offenbart.

Zur Herstellung von Komponente (D4) werden das mindestens eine Polyisocyanat (c), die mindestens eine Verbindung (d), welche sowohl mindestens eine mit NCO-Gruppen reaktive funktionelle Gruppe als auch mindestens eine durch Bestrahlung' härtbare reaktive funktionelle Gruppe enthält und das mindestens eine Silan (e) in einer sogenannten "Eintopfreaktion" miteinander zur Reaktion gebracht. Die Umsetzung kann aber auch stufenweise geschehen, das heißt, in einer ersten Stufe wird (c) mit (d) oder (e) umgesetzt und in einer zweiten Stufe wird (e) oder (d) mit dem entsprechenden Reaktionsprodukt aus der ersten Stufe weiter umgesetzt.

Zum Reaktionsende weist Komponente (D4) einen Gehalt an freiem monomeren Polyisocyanat von < 0,05 Gew.-% auf, bezogen auf das Gesamtgewicht von Komponente (D4).

Um die Komponente (D) stabil mit dem erfindungsgemäßen Bindemittel zu vermischen, soll sie keine mit den übrigen Bestandteilen unter Lagerbedingungen reaktive Gruppen enthalten. Sie soll insbesondere frei von Isocyanatgruppen sein.

In einer bevorzugen Ausführungsform der Erfindung kann eine Reaktion an der Oberfläche von Komponente (C) mit Komponente (D) in Gegenwart einer Metallverbindung der Formel (IV):

MR⁹ₓ (IV)

als Komponente (E) erfolgen.

Das Metall M dieser Verbindung wird unter solchen Elementen der Haupt- und Nebengruppen des Periodensystems ausgewählt, die formal in der Oxidationsstufe 3 oder 4 existieren können. Bevorzugt bedeutet es Ge, Sn, Pb, Ti, Zr, B oder Al. Je nach Wertigkeit bedeutet x = 3 oder 4.

Der Rest R⁹, der gleich oder verschieden sein kann, ist aus Halogen, Alkoxy, Alkoxycarbonyl und Hydroxyl ausgewählt. Da viele Metallverbindungen mit der formalen Oxidationsstufe 3 oder 4 auch als Komplexe mit einer Vielzahl von Liganden vorliegen können, kann das Bindemittel statt dessen oder zusätzlich jedoch auch Verbindungen enthalten, in denen ein Teil oder alle Gruppen R⁹ der Formel (IV) ersetzt sind durch einen oder mehrere Liganden L, der/die stärker an das Metall M gebunden werden als die Gruppe R⁹. Verbindungen dieser Art sind beispielsweise in der DE 10044216 A1 (S. 4, Zeilen 1 bis 31) beschrieben. Geeignete Metallverbindungen sind auch unter der Bezeichnung "Haftvermittter" bekannt und stellen ein oder mehrere Metallzentren wie Si, Ti, Zr oder Al dar, die an funktionelle organische Gruppen gebunden sind.

Entsprechende Titan-, Zirkonium- oder Aluminium-Verbindungen werden beispielsweise in der DE 4128743 C2 auf den Seiten 7 und 8 beschrieben, wobei für die Zr- und Ti-Verbindungen r = 0 gilt.

Bevorzugt wird als Komponente (E) Tetrabutyltitanat, Zinn(II)octanoat, Dibutylzinndilaurat, Tetraethoxysilan oder Methyltrimethoxysilan eingesetzt. Weitere bevorzugt als Komponente (E) einsetzbare Metallverbindungen (IV) sind in der EP 1342742 A1 auf der Seite 5, Zeilen 28 bis 52, beschrieben.

Kommerziell sind Titanate von der Fa. Kenrich Petrochemicals, Inc. Erhältlich unter der Bezeichnung "KR"- oder "LICA"- Substanzen. Ähnlich zu den oben erwähnten Silanen sind diese Reagenzien Verbindungen mit Alkoxyresten und gegebenenfalls zusätzlich durch funktionelle. Gruppen substituierte Reste, die über Sauerstoff an das Metallzentrum gebunden sind. Die funktionellen Gruppen sind beispielsweise Amino-, Mercapto- oder Hydroxylgruppen.

Geeignete Zirkonat-Verbindungen sind beispielsweise die als "KZ"- oder "LZ"-Reagenzien bei Kenrich Petrochemicals, Inc. erhältlichen Verbindungen, gegebenenfalls mit Amino- oder Mercaptogruppen.

Komponente (E) wird in dem erfindungsgemäßen Bindemittel zu 0 bis 12 Gew.-%, bevorzugt 0,5 Gew.-% bis 10 Gew.-% und insbesondere bevorzugt von 1 Gew.-% bis 5 Gew.-%, eingesetzt, bezogen auf die Gesamtmenge der eingesetzten Komponenten. Die Reaktion erfolgt insbesondere unter der Einwirkung von Wasser, d. h. insbesondere nach dem Auftragen als Klebstoff kann Feuchtigkeit in den Klebstoff eindringen und dann eine chemische Vernetzung zwischen den Komponenten C und D und ggf. E sicherstellen.

Das Auslösten der Polyreaktion der strahlenhärtbaren Gruppen kann durch UV-, Elektronen-Strahlen, sichtbares Licht, aber auch IR-Strahlung erfolgen. Bei Elektronen- oder UV-Bestrahlung werden die gewünschten Produkteigenschaften über die Strahlendosis eingestellt, bei IR-Strahlung über die Produkttemperatur und die Verweilzeit. Der Ablauf der photochemischen Härtung kann IR-spektroskopisch untersucht werden (Intensität und Relation der C=C und C=O Banden).

Im Rahmen der Erfindung ist die Bestrahlung mit UV-Licht oder mit Elektronenstrahlen bevorzugt.

Für den Fall, daß das erfindungsgemäße strahlenhärtbare Bindemittel mit Barriere-Eigenschaften unter UV-Bestrahlung polymerisiert werden soll, ist in der Bindemittelzusammensetzung mindestens ein Photoinitiator (F) enthalten.

Bevorzugt wird ein Photoinitiator (F) eingesetzt, der bei Bestrahlung mit Licht einer Wellenlänge von etwa 215 bis etwa 480 nm dazu in der Lage ist, eine radikalische Polymerisation olefinisch ungesättigter Doppelbindungen zu initiieren. Im Rahmen der vorliegenden Erfindung sind zum Einsatz als Photoinitiator (F) grundsätzlich alle handelsüblichen Photoinitiatoren geeignet, die mit dem erfindungsgemäßen Bindemittel kompatibel sind, d. h. wenigstens weitgehend homogene Gemische ergeben.

Beispielsweise sind dies alle Norrish-Type I fragmentierenden Substanzen. Beispiele hierfür sind Benzophenon, Campherchinon, Quantacure (Hersteller: International Bio-Synthetics), Kayacure MBP (Hersteller Nippon Kayaku), Esacure BO (Hersteller: Fratelli Lamberti), Trigonal 14 (Hersteller: Akzo), Photoinitiatoren der Irgacure®-, oder Darocur® Reihe (Firma Ciba), beispielsweise Darocur® 1173 und/oder Fi-4 (Hersteller: Eastman). Insbesondere geeignet sind darunter Irgacure® 651, Irgacure® 369, Irgacure® 184, .Irgacure® 907, Irgacure® 784, Irgacure 500, Irgacure 1000, Darocur MBF, Irgacure 1300, Darocur 4265, Darocur TPO, Irgacure 819 und 918 DW, Irgacure 2022 oder Irgacure® 2959 oder Gemische aus zwei oder mehr davon. Weiterhin geeignet sind Phosphinoxid-Verbindungen (Lucirin TPO, Hersteller: BASF AG), das auch im Gemisch mit einem oder mehreren der oben genannten Photoinitiatoren eingesetzt werden kann.

Das erfindungsgemäße Bindemittel mit Barriere-Eigenschaften enthält den Photoinitiator (F) in einer Menge von 0 bis 15 Gew.-%, bevorzugt, 0,5 bis 10 Gew.-% insbesondere bevorzugt 1 bis 5 Gew.-%, bezogen auf die Gesamtmenge der Bindemittelzusammensetzung.

Gegebenenfalls kann das erfindungsgemäße Bindemittel Zusatzstoffe (G) enthalten, die-am gesamten Bindemittel einen Anteil von bis zu etwa 50 Gew.-% haben können. Zu den im Rahmen der vorliegenden Erfindung einsetzbaren Zusatzstoffen (G) zählen beispielsweise Weichmacher, Katalysatoren, Stabilisatoren, Dispergiermittel, Antioxidantien, Farbstoffe und weitere Mittel zur Beeinflussung der Fließfähigkeit der Dispersion von Komponente (C) in Komponente (A), (B) oder (D) oder in einem Gemisch aus diesen Komponenten.

Das Bindemittel mit Barriere-Eigenschaften enthält vorzugsweise
I) 5 bis 80 Gew.-%, bevorzugt bis 60 Gew.-%, insbesondere bis 45 Gew.-%, insbesonders bevorzugt 5 bis 30 Gew.-% mindestens eine im Bereich von 18 °C bis 100 °C, bevorzugt 20 °C bis 80 °C, fließfähige Verbindung mit mindestens einer durch Bestrahlung härtbaren reaktiven funktionellen Gruppe als Komponente (A);
II) 1 bis 70 Gew.-%, bevorzugt über 5 Gew.-%, insbesondere 10 bis 60 Gew.-%, insbesonders bevorzugt 30 bis 40 Gew.-% mindestens eine Verbindung mit mindestens einer durch Bestrahlung härtbaren reaktiven-funktionellen Gruppe und mindestens einer COOH-Gruppe als Komponente (B);
III) 5 bis 50 Gew.-%, bevorzugt 20 bis 45 Gew.-%, insbesondere bevorzugt 30 bis 40 Gew.-%, mindestens einen nanoskaligen Füllstoff als Komponente (C), der bevorzugt ausgewählt ist aus der Gruppe: Oxide, Nitride, Halogenide, Sulfide, Carbide, Telluride, Selenide der zweiten bis vierten Hauptgruppe, der Übergangselemente, der Lanthanide und/oder aus der Gruppe der Polyorganosiloxane.
IV) 0 bis 50 Gew.-%, bevorzugt, 0,3 bis 40 Gew.-%, insbesondere bevorzugt 0,5 bis 30 Gew.-% mindestens einer Silicium-organischen Verbindung als Komponente (D),
V) 0 bis 12 Gew.-%, bevorzugt 0,5 bis 10 Gew.-%, insbesondere bevorzugt 1 bis 5 Gew.-% einer Metallverbindung der Formel (IV)

   MRₓ⁹ (V)

   mit M = Ge, Sn, Pb, Ti, Zr, B, Al,
   X = 3 oder 4,
   R⁹= Halogen-, Hydroxyl-, Alkoxy-, Alkoxycarboxyl-Gruppe, wobei der Rest R gleich oder verschieden sein kann, als Komponente (E),
VI) 0 bis 15 Gew.-%, bevorzugt 0,5 bis 10 Gew.-%, insbesondere bevorzugt 1 bis 5 Gew.-% eines Photoinitiators als Komponente (F),
VII) 0 bis 50 Gew.-% Zusatzstoffe als Komponente (G), ausgewählt aus der Gruppe Weichmacher, Katalysatoren, Stabilisatoren, Dispergiermittel, Antioxidantien, Farbstoffe, Füllstoffe und Mittel zur Beeinflussung der Fließfähigkeit der Dispersion von Komponente (C) in Komponente (A), (B) oder (D) oder in einem Gemisch aus diesen Komponenten,
wobei die Summe der genannten Komponenten 100 Gew.-% ergibt.

In einer besonderen Ausgestaltungsform enthält das Bindemittel mit Barriere-Eigenschaften
10 bis 50 Gew.-%, inbesondere bevorzugt 15 bis 40 Gew.-%, der Silicium-organischen Verbindung als Komponente (D4), wobei Komponente (D4) erhältlich ist durch Umsetzung von
(i) einem monomerenarmen Polyurethan-Präpolymeren mit freien NCO-Gruppen als Polyisocyanat (a), wobei das monomerenarme Polyurethan-Präpolymer ein Additionsprodukt ist aus mindestens einem Polyisocyanat der Gruppe IPDI, MDI oder TDI und mindestens einem Polyols mit einer molaren Masse von 150 g/mol bis 2000 g/mol; und mindestens
(ii) einem Hydroxyacrylat aus der Gruppe 2-Hydroxyethyl(meth)acrylat, 2-Hydroxypropyl(meth)acrylat, 3-Hydroxypropyl(meth)acrylat, 6-Hydroxyhexyl(meth)acrylat, und mindestens
(iii) einer Verbindung der Formel:

   Y-A-Si((Z)ₙ)(T)₃₋ₙ (II)

   mit
   - Y =: eine gegenüber NCO-Gruppen reaktive Gruppe, bevorzugt eine -OH,-COOH, -SH, -NH₂, NHR"- Gruppe;
   - R" =: linearer oder verzweigter, gesättigter oder ungesättigter C₁-C₁₈-Alkyl-; C₅-C₈-Cycloalkyl-, C₆-C₁₀-Aryl-, C₇-C₁₂-Aralkylrest; Oxyalkylenrest mit bis zu 4 C-Atomen, bevorzugt -(CH₂-CH₂-O)ₘ-H und/oder (CH₂- CH(CH₃)-O)m-H: A-Si((Z)ₙ)(X)₃₋ₙ; ein mit Alkyl-, Cycloalkyl- oder Arylgruppen substituierter Siloxanrest mit etwa 1 bis etwa 20 Si- Atomen;
   - A =: eine lineare oder verzweigte, gesättigte oder ungesättigte Alkylengruppe mit 1 bis 12 C-Atomen, bevorzugt eine lineare oder verzweigte Alkylengruppe mit 1 bis 4 C-Atomen
   - Z =: C₁-C₁₈-Alkylgruppe, bevorzugt C₁-C₄-Alkylgruppe;
   - T =: -NH₂; -NH-CO-R⁵; -OOC-R⁵; -O-N=C(R⁵)₂ oder OR⁶
   - R⁵=: ein linearer oder verzweigter, gesättigter oder ungesättigter C₁-C₁₈- Alkylrest, bevorzugt ein Methyl-, Ethyl- Propyl- oder iso-Propylrest;
   - R⁶=: R⁵, bevorzugt ein Methyl-, Ethyl- Propyl- oder iso-Propylrest; oder ein Oxyalkylenrest mit bis zu 4 C-Atomen, bevorzugt -(CH₂-CH₂-O)ₘ-H und/oder (CH₂-CH(CH₃)-O)ₘ-H; ein C₅-C₈-Cycloalkylrest; ein C₆-C₁₀- Arylrest oder ein C₇-C₁₂-Aralkylrest;
   - m =: 1 bis 40, bevorzugt 1 bis 20, insbesondere bevorzugt 1 bis 10;
   - n =: 0, 1 oder 2.

Das monomerenarme Polyurethan-Präpolymer der Stufe (i) enthält weniger als 0,5 Gew.-%, bevorzugt weniger als 0,3 und insbesondere bevorzugt weniger als 0,1 Gew.-% freies monomeres Polyisocyanat der Gruppe IPDI, MDI oder TDI, bezogen auf die Gesamtmenge PU-Präpolymer. Die vorhandenen Isocyanatgruppen sollen während der Umsetzung der Bestandteile i, ii, iii zu D4 abreagieren.

In einer weiteren bevorzugten Ausgestaltungsform der Erfindung sind die Komponenten (D1), (D2) und/oder (D3) zu 0,3 Gew.-% bis 20 Gew.-%, bevorzugt 0,4 Gew.-% bis 15 Gew.-% und insbesondere bevorzugt 0,5 bis 10 Gew.-% enthalten, bezogen auf die Gesamtzusammensetzung der Komponenten (I) bis (VII).

Das erfindungsgemäße strahlenhärtbare Bindemittel mit Barriere-Eigenschaften kann, je nach gefordertem Anwendungsbereich, noch bis zu 60 Gew.-% eines inerten Lösemittels enthalten.

Als Lösemittel sind grundsätzlich alle dem Fachmann bekannte Lösemittel verwendbar, insbesondere Ester, Ketone, halogenierte Kohlenwasserstoffe, Alkane, Alkene und aromatische Kohlenwasserstoffe. Beispiele für solche Lösemittel sind Methylenchlorid, Trichlorethylen, Toluol, Xylol, Butylacetat, Amylacetat, Isobutylacetat, Methylisobutylketon, Methoxybutylacetat, Cyclohexan, Cyclohexanon, Dichlorbenzol, Diethylketon, Di-isobutylketon, bioxan, Ethylacetat, Ethylenglykolmonobutyletheracetat, Ethylenglykolmonoethylacetat, 2-Ethylhexylacetat, Glykoldiacetat, Heptan, Hexan, Isobutylacetat, Isooctan, Isopropylacetat, Methylethylketon, Tetrahydrofuran oder Tetrachlorethylen oder Mischungen aus zwei oder mehr der genannten Lösemittel.

Die Herstellung des erfindungsgemäßen strahlenhärtbaren Bindemittel mit Barriere-Eigenschaften kann durch übliche, dem Fachmann im Rahmen der Herstellung von polymeren Mischungen bekannten Techniken erfolgen.

Die Härtung des Bindemittels führt zu blockfesten, d. h. nicht klebenden und insbesondere kratzfesten Beschichtungen, Füll- oder Dichtstoffen mit flexiblen Eigenschaften oder auch oberflächenklebrigen Klebstoffen. Die erfindungsgemäßen strahlenhärtbaren Bindemittel mit Barriere-Eigenschaften können daher als Beschichtungsmittel, Füll-, Dicht- oder Klebstoff eingesetzt werden und zeichnen sich als Kleb- Dicht, oder Füllstoffe mit Barriere-Eigenschaften gegenüber CO₂, O₂, N₂, Gasmischungen, beispielsweise aus CO₂ und N₂, Wasserdampf und Aromastoffen aus.

Grundsätzlich ist das erfindungsgemäße strahlenhärtbare Bindemittel mit Barriere-Eigenschaften zum Füllen, Dichten, Beschichten und Verkleben unterschiedlichster Materialien verwendbar. Zu den Materialien zählen beispielsweise Holz, Metall, Glas, Pflanzenfasern, Stein, Papier, Cellulosehydrat, Kunststoffe wie Polystyrol, Polyethylen, Polypropylen, Polyethylenterephthalat, Polyvinylchlorid, Copolymere von Vinylchlorid und Vinylidenchlorid, Copolymere von Vinylacetatolefinen, Polyamide, oder Metallfolien, beispielsweise aus Aluminium, Blei oder Kupfer.

Das erfindungsgemäße strahlenhärtbare Bindemittel mit Barriere-Eigenschaften kann durch alle geeigneten Verfahren auf das Substrat aufgetragen werden, beispielsweise durch Sprühen, Rakeln, 3-4-Walzenauftragswerke im Falle der Anwendung eines lösemittelfreien Bindemittels oder 2 Walzenauftragswerke im Falle der Abwendung eines lösemittelhaltigen Bindemittels.

Das strahlenhärtbare Bindemittel mit Barriere-Eigenschaften eignet sich zur Beschichtung von Substraten aus Glas, Metall, Kunststoff, Papier, Keramik etc. durch Tauchen, Gießen, Streichen, Spritzen, elektrostatisches Spritzen, Elektrotauchlackierung etc. Die Bindemittel sind insbesondere für die Beschichtung optischer, optoelektrischer oder elektronischer Artikel geeignet und zur Beschichtung von Containern für Treib- und Heizstoffe.

Mit dem strahlenhärtbaren Bindemittel werden Klebstoffe mit Barriere-Eigenschaften zur Verfügung gestellt, die sich bevorzugt für die Herstellung von Folienverbunden eignen. Durch einen Gehalt von weniger als 0,05 Gew.-% an monomeren Polyisocyanat eignet sich das Bindemittel insbesondere für flexible Folienverbunde, die im Lebensmittelverpackungsbereich eingesetzt werden..

Ein weiterer Gegenstand der vorliegenden Erfindung ist daher auch ein Verfahren zur Herstellung von Folienverbunden aus mindestens zwei gleichen oder unterschiedlichen Kunststofffolien, die durch das teil- oder vollflächige Verkleben von Folien erhältlich sind, unter Verwendung des erfindungsgemäßen strahlenhärtbaren Bindemittels mit Barriere-Eigenschaften.

Der Auftrag des Bindemittels auf die zu verklebenden Folien kann mit üblicherweise für solche Zwecke eingesetzten Maschinen, beispielsweise mit herkömmlichen Laminiermaschinen erfolgen. Besonders geeignet ist der Auftrag des Bindemittels im flüssigen Zustand auf eine zu einem Laminat zu verklebende Folie, beispielsweise einer Folie aus Kunststoff oder Metall. Die Viskosität des Bindemittels wird so gewählt, daß es bei typischen Verarbeitungstemperaturen eine Viskosität von etwa 1000 mPa·s bis etwa 5000 mPa·s (gemessen nach Brookfield, Digital Viscosimeter RVT DV-II, Spindel 27) aufweist. Typische Verarbeitungstemperaturen sind beispielsweise etwa 25 °C bis etwa 75 °C bei der Herstellung flexibler Verpackungsfolien (flexible packaging), etwa 70 bis etwa 90 °C bei der Kaschierung von Hochglanzfolien und etwa 80 bis etwa 130 °C bei Anwendungen im Textilbereich.

Die mit dem lösemittelhaltigen strahlenhärtbaren Bindemittel mit Barriere-Eigenschaften beschichtete Folie wird zunächst im Trockenkanal bei 40 bis 120 °C getrocknet, dann mit mindestens einer weiteren Folie, ggf. unter Druck, kaschiert und anschließend bestrahlt. Bei den lösemittelfreien Bindemittel entfällt die Trockenstufe. Das strahlenhärtbare Bindemittel mit Barriere-Eigenschaften gewinnt durch die Bestrahlung und die damit verbundene Vernetzungsreaktion an Molekulargewicht, hat dadurch mehr Kohäsion und besitzt eine haftklebrige Oberfläche. Erfolgt die Bestrahlung mittels UV-Licht , enthält das erfindungsgemäß eingesetzte Bindemittel mindestens-einen Photoinitiator-als Komponente (F).

Das beschriebene Verfahren kann mehrfach wiederholt werden, so daß Folienverbunde hergestellt werden können, die aus mehr als zwei verklebten Schichten bestehen.

Das erfindungsgemäße Verfahren kann unter Schutzgasatmosphäre, also in Anwesenheit inerter Gase wie Stickstoff durchgeführt werden Es ist aber auch vorteilhafterweise unter Normalatmosphäre, wie sie typischerweise in den Produktionshallen vorherrscht, problemlos durchführbar.

Ein weiterer Gegenstand der Erfindung ist eine Verbundfolie, hergestellt unter Verwendung des erfindungsgemäßen Bindemittels. Die Verbundfolie ist insbesondere als Barriere-Folie-zum Verpacken von Lebensmitteln geeignet. In der Praxis der Lebensmittelverpackung spricht man von Barriere-Folien, wenn die Sauerstoffdurchlässigkeit Q (O₂) < 100 cm³/(m² x Tag x bar) und die Wasserdampfdurchlässigkeit Q (H₂O) < 10 g/(m² xTag) bei 23 °C und 85 % rel. Feuchte beträgt (Delventhal, Verpackungs-Rundschau 3/1991, Seite 19-23).

Das als Bindemittel in dem erfindungsgemäßen Kleb-, Dicht- oder Beschichtungsstoff enthaltene Polymer entspricht gemäß einer weiteren Ausführungsform vorteilhaft der allgemeinen Formel (I) 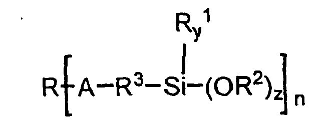 in der R ein organisches Grundgerüst ist,
A eine Carboxy-, Carbamat-, Carbonat-, Ureido-, Urethan- oder Sulfonatbindung oder ein Sauerstoffatom bedeutet, R¹ ein Alkylrest mit 1 bis 4 C-Atomen oder OR² ist, R² ein Alkylrest mit 1 bis 4 C-Atomen oder ein Acylrest mit 1 bis 4 C-Atomen ist, R³ ein geradkettiger oder verzweigter, substituierter oder unsubstituierter Alkylenrest mit 1 bis 8 C-Atomen ist, y = 0 bis 2 ist, z = 3 - y ist und n = 1 bis 10000 ist, wobei die Silylreste gleich oder verschieden sein können und im Falle von mehreren Resten R¹ bzw. R² diese jeweils gleich oder verschieden sein können.

Das organische Grundgerüst ist vorteilhaft ausgewählt aus der Gruppe umfassend Alkydharze, ölmodifizierte Alkydharze, ungesättigte Polyester, natürliche Öle, z. B. Leinöl, Tungöl, Sojabohnenöl, sowie Epoxide, Polyamide, thermoplastische Polyester wie z. B. Polyethylenterephthalat und Polybutylenterephthalat, Polycarbonate, Polyethylene, Polybutylene, Polystyrole, Polypropylene, Ethylenpropylenco- und Terpolymere, Acrylate, z. B. Homo- und Copolymere von Acrylsäure, Acrylaten, Methacrylaten, Acrylamiden, ihren Salzen und dergleichen, Phenolharze, Polyoxymethylenhomo- und -copolymere, Polyurethane, Polysulfone, Polysulfidkautschuke, Nitrocellulose; Vinylbutyrate, Vinylpolymere, z. B. Vinylchlorid- und/oder Vinylacetat enthaltende Polymere, Ethylcellulose, Celluloseacetate und - butyrate, Reyon, Schellack, Wachse, Ethylencoplymere wie z. B. Ethylenvinylacetatcopolymere, Ethylenacrylsäurecopolymere, Ethylenacrylatcopolymere, organische Kautschuke, Silikonharze und dergleichen. Weitere Beispiele schließen Polyether wie Polyethylenoxid, Polypropylenoxid und Polytetrahydrofuran, Polyol, Poly(meth)acrylat, Polyvinylalkohol ein. Von den genannten polymeren Grundgerüsten werden Polyether, Polyester, Polyurethane und Polyole besonders bevorzugt

Weitere vorteilhafte Zusammensetzungen stellen physikalisch abbindende Kleb-, Dicht- und Beschichtungsstoffe dar. Unter physikalisch abbindenden Kleb-, Dicht- und Beschichtungsstoffen versteht man z.B. Dispersionsklebstoffe, Lösemittelklebstoffe und Schmelzklebstoffe.

Dispersionsklebstoffe werden üblicherweise durch Kombination von Polymerdispersionen wie z.B. Polyvinylacetat- und Potyacrytatdisersionen hergestellt.

Eine bevorzugte Zusammensetzung umfasst eine wässrige Dispersion aus Copolymeren von Styrol oder alpha-Methylstyrol mit Dienen oder Acrylderivaten aus der Gruppe Styrol-Butadien, Styrol-Acryinitril, Styrol-Alkylmethacrylat, Styrol-Butadien-Alkylacrylat und -methacrylat, Styrol-Maleinsäureanhydrid, Styrol Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol (SBS), Styrol-Isopren-Styrol, Styrol-Ethylen/Butylen-Styrol oder Styrol-Ethylen/Propylen-Styrol.

Eine bevorzugte Zusammensetzung umfasst weiterhin mindestens eine wässrige Emulsion natürlicher oder synthetischer Kautschuke, wie beispielsweise Naturkautschuk-Latex oder Latices von carboxylierten Styrol-Butadien-Copolymeren. Diese bevorzugte Zusammensetzung kann erfindungsgemäß alleine als so genanntes 100%-System oder dispergiert in Wasser oder gelöst in einem Lösemittel verwendet werden.

Eine weitere bevorzugte Zusammensetzung umfasst Polymere, die sich von alpha,beta-ungesättigten Säuren und deren Derivaten ableiten, wie Polyacrylate und Polymethacrylate, Polyacrylamide und Polyacrylnitrile. Diese bevorzugte Zusammensetzung kann erfindungsgemäß alleine als 100%-System oder dispergiert in Wasser oder gelöst in einem Lösemittel verwendet werden.

Eine weitere bevorzugte Zusammensetzung umfasst halogenhaltige Polymere, wie z.B. Polychloropren, Chlorkautschuk, chloriertes oder chlorsulfoniertes Polyethylen, Copolymere von Ethylen und chloriertem Ethylen, Epichlorhydrinhomo- und - copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie wie deren Copolymere, wie Vinylchlorid-Vinylidenchlorid, Vinylchlorid-Vinylacetat oder Vinylidenchlorid Vinylacetat. Diese bevorzugte Zusammensetzung kann erfindungsgemäß alleine als 100%-System oder dispergiert in Wasser oder gelöst in einem Lösemittel verwendet werden.

Die erfindungsgemäße Zusammensetzung kann weiterhin Füllstoffe wie z.B. Kreide, Talkum, Schwerspat, Gips, Titandioxid sowie weiterhin Weichmacher wie z.B. Phthalsäurester, Adipate, Benzoate, Citrate, Alkylbenzole sowie weiterhin Harze wie z.B. Kollophonium, Kollophoniumester, KW Harze, Abietol sowie weiterhin Lösemittel wie z.B. Aceton, Essigester, Toluol, Benzon, Cyclohexan, THF.

### Ausführungsbeispiel

### Zusammensetzung Rohstoffe aus der Tabelle Silikonrezepturen

| Chemische Bezeichnung der Rohstoffe | |
|---|---|
| Handelsname | Allg. Rohstoffbezeichnung |
| Polymer FD 80 | Dihydroxypolydimethylsiloxan |
| Weichmacher 1000 | Trimethylsilylpolydimethylsiloxan |
| Vernetzer ES 24 | Mischung von Alkylacetoxysilanen und -siloxanen |
| HDK V 15 | Hochdisperse Kieselsäure |
| Katalysator SK | Organozinnverbindung (Dibutylzinndiacetat) |

### Herstellverfahren:

Herstellung erfolgt im Speedmixer, z.B. SpeedMixer DAC 400 FVZ der Fa. Hauschild Engineering.
1.Einwaage Polymer FD 80
2.Einwaage Weichmacher 1000
3.Vermischen mit Speedmixer bei 2000 rpm, 30 Sekunden lang
4.Einwaage Vernetzer ES 24
5.Vermischen mit Speedmixer bei 2000 rpm, 30 Sekunden lang
6. Einwaage HDK V 15 und Glaspulver K3, Trovotech, 1/3 der jeweiligen Gesamtrohstoffkonzentration
7.Vakuum ziehen
8. Vermischen mit Speedmixer bei 2000 rpm, 30 Sekunden lang
9. Einwaage HDK V 15 und Glaspulver K3, Trovotech, 1/3 der jeweiligen Gesamtrohstoffkonzentration
10.Vakuum ziehen
11.Vermischen mit Speedmixer bei 2000 rpm, 30 Sekunden lang
12. Einwaage HDK V 15 und Glaspulver K3, Trovotech, 1/3 der jeweiligen Gesamtrohstoffkonzentration
13.Vakuum ziehen
14. Vermischen mit Speedmixer bei 2000 rpm, 30 Sekunden lang
15. Einwaage Katalysator SK
16.Vermischen mit Speedmixer bei 2000 rpm, 30 Sekunden lang

## Patentansprüche

1. Als Kleb- oder Dicht- oder Beschichtungsstoffe geeignete chemisch oder physikalisch härtbare Zusammensetzungen, die mindestens ein Bindemittel ausgewählt aus der Gruppe bestehend aus vernetzbaren oder polymerisierbaren Monomeren, Präpolymeren oder Polymeren sowie mindestens einen Füllstoff enthalten, **dadurch gekennzeichnet, daß** der Füllstoffanteil 0,2 bis 70 Gew.-% bezogen auf das Gesamtgewicht der Zusammensetzungen beträgt und 10 bis 100 Gew.-% des Füllstoffs aus Glaspartikeln mit einer Teilchengröße von 100 nm bis 20 µm besteht, die durch Zerkleinern von aufgeschäumtem neutralem oder alkalischem Glas erhalten worden sind.

2. Zusammensetzungen nach Anspruch 1, **dadurch gekennzeichnet, daß** die Oberfläche der Glaspartikel chemisch modifiziert ist.

3. Zusammensetzungen nach Anspruch 1 oder 2, **dadurch gekennzeichnet, daß** sie als vernetzbare Monomere 2-Cyanoacrylsäureester enthalten.

4. Zusammensetzungen nach Anspruch 1 oder 2, **dadurch gekennzeichnet, daß** sie als Bindemittel ein Polyurethanbindemittel auf Basis mindestens eines Polyisocyanats und mindestens eines Polyols und/oder Polyamins enthalten.

5. Zusammensetzungen nach Anspruch 1 oder 2, **dadurch gekennzeichnet, daß** sie als Bindemittel eine Dispersion auf der Basis von Polyvinylacetat, Polyacrylat, Polybutadienstyrol, Polyvinyliden, Polyurethan, Polychloropren, Kautschuk, Vinylacetat-Acrylat-Copolymeren, Maleinaten oder Polyolefinen enthalten.

6. Zusammensetzungen nach Anspruch 1 oder 2, **dadurch gekennzeichnet, daß** sie als Bindemittel einen Schmelzklebstoff enthalten.

7. Zusammensetzungen nach Anspruch 6, **dadurch gekennzeichnet, daß** der Schmelzklebstoff ausgewählt ist aus der Gruppe bestehend aus druckempfindlichen Klebstoffen, Polyolefinen, Ethylenvinylacetatcopolymeren, Polyamiden, Polyurethanen, silanterminierten Polyurethanen und silanterminierten Polyamiden.

8. Zusammensetzungen nach Anspruch 1 oder 2, **dadurch gekennzeichnet, daß** sie als Bindemittel Epoxidharze enthalten.

9. Zusammensetzungen nach Anspruch 1 oder 2, **dadurch gekennzeichnet, daß** sie als Bindemittel Silicone, silanhärtende Polymere, modifizierte Silicone (MS-Polymere), Polysulfide, Polyurethane, Kautschuk, Polyacrylate, Dispersionsdichtstoffe, Polyvinylchlorid und/oder andere Plastisole enthalten.

10. Zusammensetzungen nach Anspruch 1 oder 2, **dadurch gekennzeichnet, daß** sie als Bindemittel ein Zweikomponenten-Polyurethan-Bindemittel und neben den Glaspartikeln als weiteren Füllstoff Holzteilchen und/oder cellulosehaltiges Material enthalten.

## Claims

1. Chemically or physically curable compositions suitable as adhesives or sealants or coating materials, which compositions contain at least one binder selected from the group consisting of crosslinkable or polymerisable monomers, prepolymers or polymers and at least one filler, **characterised in that** the filler content amounts to 0.2 to 70 wt.% relative to the total weight of the compositions and 10 to 100 wt.% of the filler consists of glass particles with a particle size from 100 nm to 20 µm, which have been obtained by comminution of foamed neutral or alkaline glass.

2. Compositions according to claim 1, **characterised in that** the surface of the glass particles is chemically modified.

3. Compositions according to claim 1 or claim 2, **characterised in that** they contain 2-cyanoacrylic acid esters as crosslinkable monomers.

4. Compositions according to claim 1 or claim 2, **characterised in that** they contain as binder a polyurethane binder based on at least one polyisocyanate and at least one polyol and/or polyamine.

5. Compositions according to claim 1 or claim 2, **characterised in that** they contain as binder a dispersion based on polyvinyl acetate, polyacrylate, polybutadiene-styrene, polyvinylidene, polyurethane, polychloroprene, rubber, vinyl acetate-acrylate copolymers, maleinates or polyolefins.

6. Compositions according to claim 1 or claim 2, **characterised in that** they contain a hot-melt adhesive as binder.

7. Compositions according to claim 6, **characterised in that** the hot-melt adhesive is selected from the group consisting of pressure-sensitive adhesives, polyolefins, ethylene-vinyl acetate copolymers, polyamides, polyurethanes, silane-terminated polyurethanes and silane-terminated polyamides.

8. Compositions according to claim 1 or claim 2, **characterised in that** they contain epoxy resins as binder.

9. Compositions according to claim 1 or claim 2, **characterised in that** they contain as binder silicones, silane-curing polymers, modified silicones (MS polymers), polysulfides, polyurethanes, rubber, polyacrylates, dispersion sealants, polyvinyl chloride and/or other plastisols.

10. Compositions according to claim 1 or claim 2, **characterised in that** they contain a two-component polyurethane binder as binder and wood particles and/or cellulose-containing material as further filler in addition to the glass particles.

## Revendications

1. Compositions durcissables par voie chimique ou par voie physique, appropriées comme adhésifs ou comme substances d'étanchéité ou d'enduction, qui contiennent au moins un liant choisi parmi le groupe constitué par des monomères, des prépolymères ou des polymères, réticulables ou polymérisables, et au moins une substance de charge, **caractérisées en ce que** la fraction de substance de charge représente de 0,2 à 70 % en poids rapportés au poids total des compositions et la substance de charge est constituée à concurrence de 10 à 100 % en poids par des particules de verre possédant une granulométrie de 100 nm à 20 µm, que l'on a obtenues par broyage de verre neutre ou alcalin transformé en mousse.

2. Compositions selon la revendication 1, **caractérisées en ce que** la surface des particules de verre a subi une modification par voie chimique.

3. Compositions selon la revendication 1 ou 2, **caractérisées en ce que** qu'elles contiennent, à titre de monomères réticulables, des esters de l'acide 2-cyanoacrylique.

4. Compositions selon la revendication 1 ou 2, **caractérisées en ce que** qu'elles contiennent, à titre de liant, un liant de polyuréthane à base d'au moins un polyisocyanate et d'au moins un polyol et/ou d'une polyamine.

5. Compositions selon la revendication 1 ou 2, **caractérisées en ce que** qu'elles contiennent, à titre de liant, une dispersion à base d'acétate de polyvinyle, de polyacrylate, de polybutadiène-styrène, de polyvinylidène, de polyuréthane, de polychloroprène, de caoutchouc, de copolymères d'acétate de vinyle-acrylate, de maléinates ou de polyoléfines.

6. Compositions selon la revendication 1 ou 2, **caractérisées en ce que** qu'elles contiennent, à titre de liant, un adhésif thermofusible.

7. Compositions selon la revendication 6, **caractérisées en ce que** l'adhésif thermofusible est choisi parmi le groupe constitué par des adhésifs, des polyoléfines, des copolymères d'éthylène-acétate de vinyle, des polyamides, des polyuréthanes, des polyuréthanes à terminaison silane et des polyamides à terminaison silane, sensibles à la pression.

8. Compositions selon la revendication 1 ou 2, **caractérisées en ce que** qu'elles contiennent, à titre de liant, des résines époxydes.

9. Compositions selon la revendication 1 ou 2, **caractérisées en ce que** qu'elles contiennent, à titre de liant, des silicones, des polymères à durcissement silane, des silicones modifiées (MS polymères), des polysulfures, des polyuréthanes, du caoutchouc, des polyacrylates, des substances d'étanchéité en dispersion, du chlorure de polyvinyle et/ou d'autres plastisols.

10. Compositions selon la revendication 1 ou 2, **caractérisées en ce que** qu'elles contiennent, à titre de liant, un liant de polyuréthane à deux composants et, à côté des particules de verre, à titre de matière de charge supplémentaire, des particules de bois et/ou une matière cellulosique.
